# EUROPEAN PATENT APPLICATION

(11) **EP 4 787 783 A1**
(43) Date of publication of application: **05.08.2026**
(21) Application number: 23953811.9
(22) Date of filing: 28.09.2023
(51) Int. Cl.: H04L 12/14, H04M 15/00, H04W 28/02, H04W 12/02, H04L 47/12, H04L 47/24, H04W 4/24, H04W 28/24

(54) **INFORMATION PROCESSING METHOD, NETWORK ELEMENT, SYSTEM, AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/122978
(87) International publication number: WO 2025/065667

(57) **Abstract**

The present disclosure relates to an information processing method, a network element, a system, and a storage medium. The information processing method comprises: an AF network element sends first information to a policy control function (PCF) network element, wherein the first information comprises quality of service (QoS) demand information and encryption indication information of a service data flow, and is used for a radio access network (RAN) network element to execute encrypted packet data unit set (PDU set)-based processing. According to embodiments of the present disclosure, PDU set-based processing of an encrypted application service data flow can be supported, and the functions of QoS processing, congestion control and the like based on a PDU set level are realized.

## Description

### TECHNICAL FIELD

The present disclosure relates to the field of communication technology, and in particular to a method for processing information, a network element, a system, and a storage medium.

### BACKGROUND

Extended reality and multimedia (XRM) services and interactive media services need to comprehensively consider a quality of service (QoS) characteristic of a service-related data flow, for example, whether parameters such as a delay-critical guaranteed bit rate (GBR) data flow, a packet delay budget data flow and a default maximum data burst volume may be simultaneously satisfied and coordinate with each other consistently.

### SUMMARY

Currently, packet data unit (PDU) set based handling of an encrypted application service data flow is not supported, resulting in that functions such as quality of service (QoS) handling and congestion control at a PDU set level cannot be realized.

The embodiments of the present disclosure provide a method for processing information, a network element, a system, and a storage medium.

According to a first aspect of the embodiments of the present disclosure, a method for processing information is provided, performed by an application function (AF) network element, including: sending, by the AF network element, first information to a policy control function (PCF) network element, in which the first information includes quality of service (QoS) requirement information and encryption indication information of a service data flow, configured for a radio access network (RAN) element to perform encrypted PDU set based handling.

According to a second aspect of the embodiments of the present disclosure, a method for processing information is provided, performed by a PCF network element, including: receiving, by the PCF network element, first information, in which the first information includes QoS requirement information and encryption indication information of a service data flow, configured for an RAN element to perform PDU set based handling; determining, by the PCF network element, a policy control and charging (PCC) rule of the service data flow based on the QoS requirement information and the encryption indication information; and sending, by the PCF network element, the PCC rule to a session management function (SMF) network element.

According to a third aspect of the embodiments of the present disclosure, a method for processing information is provided, performed by an SMF network element, including: receiving, by the SMF network element, a PCC rule and encryption indication information of a service data flow, and determining a QoS rule of the service data flow based on the PCC rule and the encryption indication information, in which the QoS rule includes a PDU set QoS parameter of the service data flow; and sending, by the SMF network element, second information to a user plane function (UPF) network element, in which the second information includes at least one of the QoS rule or the encryption indication information.

According to a fourth aspect of the embodiments of the present disclosure, a method for processing information is provided, performed by a UPF network element, including: receiving, by the UPF network element, encryption indication information of a service data flow; identifying and determining, by the UPF network element, PDU set information from an extension header of the service data flow based on the encryption indication information; and sending, by the UPF network element, the PDU set information to an RAN network element.

According to a fifth aspect of the embodiments of the present disclosure, a method for processing information is provided, performed by a network exposure function (NEF) network element, including: receiving, by the NEF network element, first information sent by an AF network element, in which the first information includes QoS requirement information and encryption indication information of a service data flow, configured for an RAN element to perform encrypted PDU set based handling; and sending, by the NEF network element, the first information to a PCF network element.

According to a sixth aspect of the embodiments of the present disclosure, a method for processing information is provided, performed by an RAN network element, including: receiving, by the RAN network element, PDU set information of a service data flow sent by a UPF network element; receiving, by the RAN network element, a QoS rule of the service data flow, in which the QoS rule includes a PDU set QoS parameter of the service data flow; and performing, by the RAN network element, PDU set based handling on a received service data flow based on the PDU set information and the QoS rule.

According to a seventh aspect of the embodiments of the present disclosure, an AF network element is provided, including: a transceiver module, configured to send first information to a PCF network element, in which the first information includes QoS requirement information and encryption indication information of a service data flow, configured for an RAN element to perform encrypted PDU set based handling.

According to an eighth aspect of the embodiments of the present disclosure, a PCF network element is provided, including: a transceiver module, configured to receive first information, in which the first information includes QoS requirement information and encryption indication information of a service data flow, configured for an RAN element to perform PDU set based handling; and send a PCC rule to an SMF network element; and a processing module, configured to determine the PCC rule of the service data flow based on the QoS requirement information and the encryption indication information.

According to a ninth aspect of the embodiments of the present disclosure, an SMF network element is provided, including: a transceiver module, configured to receive a PCC rule and encryption indication information of a service data flow, and determine a QoS rule of the service data flow based on the PCC rule and the encryption indication information, in which the QoS rule includes a PDU set QoS parameter of the service data flow; and send second information to a UPF network element, in which the second information includes at least one of the QoS rule or the encryption indication information.

According to a tenth aspect of the embodiments of the present disclosure, a UPF network element is provided, including: a transceiver module, configured to receive encryption indication information of a service data flow, and send PDU set information of the service data flow to an RAN network element; and a processing module, configured to identify and determine the PDU set information from an extension header of the service data flow based on the encryption indication information.

According to an eleventh aspect of the embodiments of the present disclosure, an NEF network element is provided, including: a transceiver module, configured to receive first information sent by an AF network element, in which the first information includes QoS requirement information and encryption indication information of a service data flow, configured for an RAN element to perform encrypted PDU set based handling; and send the first information to a PCF network element.

According to a twelfth aspect of the embodiments of the present disclosure, an RAN network element is provided, including: a transceiver module, configured to receive PDU set information of a service data flow sent by a UPF network element, and receive a QoS rule of the service data flow, in which the QoS rule includes a PDU set QoS parameter of the service data flow; and a processing module, configured to perform PDU set based handling on a received service data flow based on the PDU set information and the QoS rule.

According to a thirteenth aspect of the embodiments of the present disclosure, a communication system is provided, including: an AF network element, a PCF network element, an SMF network element, a UPF network element, an NEF network element, and an RAN element, in which the AF network element is configured to implement the method for processing information according to the first aspect, the PCF network element is configured to implement the method for processing information according to the second aspect, the SMF network element is configured to implement the method for processing information according to the third aspect, the UPF network element is configured to implement the method for processing information according to the fourth aspect, the NEF network element is configured to implement the method for processing information according to the fifth aspect, and the RAN network element is configured to implement the method for processing information according to the sixth aspect.

According to a fourteenth aspect of the embodiments of the present disclosure, a storage medium for storing instructions is provided. When the instructions are running on a communication device, the communication device is caused to perform the method for processing information according to any one of the first aspect, the second aspect, the third aspect, the fourth aspect, the fifth aspect, or the sixth aspect.

In the embodiments of the present disclosure, it is possible to support PDU set based handling of an encrypted application service data flow, so as to realize functions such as QoS handling and congestion control at a PDU set level.

### BRIEF DESCRIPTION OF THE DRAWINGS

In order to clearly illustrate the technical solution in the embodiments of the disclosure, the accompanying drawings to be used in the embodiments of the disclosure are described below. The following drawings are only some embodiments of the present disclosure, and do not constitute a limitation on the protection scope of the present disclosure.
FIG. 1 is an exemplary schematic diagram of an architecture of a communication system according to an embodiment of the present disclosure.
FIG. 2A is an exemplary interaction diagram of a method for processing information according to an embodiment of the present disclosure.
FIG. 2B is another exemplary interaction diagram of a method for processing information according to an embodiment of the present disclosure.
FIG. 2C is another exemplary interaction diagram of a method for processing information according to an embodiment of the present disclosure.
FIG. 2D is another exemplary interaction diagram of a method for processing information according to an embodiment of the present disclosure.
FIG. 3A is an exemplary flowchart of a method for processing information according to an embodiment of the present disclosure.
FIG. 3B is another exemplary flowchart of a method for processing information according to an embodiment of the present disclosure.
FIG. 3C is another exemplary flowchart of a method for processing information according to an embodiment of the present disclosure.
FIG. 4A is another exemplary flowchart of a method for processing information according to an embodiment of the present disclosure.
FIG. 4B is another exemplary flowchart of a method for processing information according to an embodiment of the present disclosure.
FIG. 4C is another exemplary flowchart of a method for processing information according to an embodiment of the present disclosure.
FIG. 5A is another exemplary flowchart of a method for processing information according to an embodiment of the present disclosure.
FIG. 5B is another exemplary flowchart of a method for processing information according to an embodiment of the present disclosure.
FIG. 5C is another exemplary flowchart of a method for processing information according to an embodiment of the present disclosure.
FIG. 6A is another exemplary flowchart of a method for processing information according to an embodiment of the present disclosure.
FIG. 6B is another exemplary flowchart of a method for processing information according to an embodiment of the present disclosure.
FIG. 6C is another exemplary flowchart of a method for processing information according to an embodiment of the present disclosure.
FIG. 6D is another exemplary flowchart of a method for processing information according to an embodiment of the present disclosure.
FIG. 7A is another exemplary flowchart of a method for processing information according to an embodiment of the present disclosure.
FIG. 7B is another exemplary flowchart of a method for processing information according to an embodiment of the present disclosure.
FIG. 8A is another exemplary flowchart of a method for processing information according to an embodiment of the present disclosure.
FIG. 8B is another exemplary flowchart of a method for processing information according to an embodiment of the present disclosure.
FIG. 8C is another exemplary flowchart of a method for processing information according to an embodiment of the present disclosure.
FIG. 9A is another exemplary flowchart of a method for processing information according to an embodiment of the present disclosure.
FIG. 9B is another exemplary flowchart of a method for processing information according to an embodiment of the present disclosure.
FIG. 10A is a block diagram of a network element according to an embodiment of the present disclosure.
FIG. 11A is a block diagram of a communication device according to an embodiment of the present disclosure.
FIG. 11B is a block diagram of a chip according to an embodiment of the present disclosure.

### DETAILED DESCRIPTION

The embodiments of the present disclosure provide a method for processing information, a network element, a system, and a storage medium.

According to a first aspect, the embodiments of the present disclosure provide a method for processing information, performed by an application function (AF) network element, including: sending, by the AF network element, first information to a policy control function (PCF) network element, in which the first information includes quality of service (QoS) requirement information and encryption indication information of a service data flow, configured for a radio access network (RAN) element to perform encrypted packet data unit (PDU) set based handling.

In the above embodiments, sending the encryption indication information and the QoS requirement information to the PCF network element provides a reliable basis for the RAN element to perform the encrypted PDU set based handling, which solves problems in the related art that it is unable to support PDU set based handling of an encrypted application service data flow and functions such as QoS handling and congestion control at a PDU set level cannot be realized.

In some embodiments in combination with the first aspect, in some embodiments, the encryption indication information includes at least one of: first indication information indicating whether the service data flow is encrypted; second indication information indicating whether the service data flow supports the encrypted PDU set based handling; third indication information indicating an encrypted mode of a header of the service data flow, in which the encrypted mode includes a fully encrypted header and a partially encrypted header; fourth indication information indicating whether the service data flow supports an encrypted proxy; fifth indication information indicating whether the service data flow is end-to-end (E2E) encryption; sixth indication information indicating whether the service data flow prioritizes execution of the encrypted PDU set based handling; or description information related to an encryption protocol of the service data flow.

In the above embodiments, by configuring comprehensive encryption indication information of the service data flow, the PCF may perform a subsequent analysis based on the comprehensive encryption indication information, which provides an accurate and reliable basis for the subsequent analysis.

In some embodiments in combination with the first aspect, in some embodiments, the first information carries description information of a specific protocol, and the description information of the specific protocol is configured to implicitly transmit the encryption indication information.

In the above embodiments, the first information carries the description information of the specific protocol, which may transmit the encryption indication information via a feature or a rule of the protocol itself without adding an extra header or field, so as to reduce transmission overhead and protect security of the encryption indication information.

In some embodiments in combination with the first aspect, in some embodiments, the method further includes: sending, by the AF network element, the first information to the PCF network element via an AF QoS request; or sending, by the AF network element, the first information to the PCF network element via an AF QoS update message.

In the above embodiments, the AF network element may send the first information using a plurality of methods, which provides higher flexibility. The AF QoS request sends the first information to the PCF network element before a PDU session is established, which may facilitate the PCF network element to make a policy decision in advance, and the AF QoS update message sends the first information to the PCF network element after the PDU session is established, which may facilitate the PCF network element to make a policy adjustment based on a change in the service data flow.

In some embodiments in combination with the first aspect, in some embodiments, the first information further includes at least one of: service information of an extended reality and multimedia (XRM) service; a terminal address or a terminal identifier; AF application identifier information; description information of the service data flow; a QoS parameter of the service data flow; or a data network name (DNN) and single-network slice selection assistance information (S-NSSAI).

In the above embodiments, information that may be included in the first information is listed. The service information of the XRM service is used to identify which XRM service type the service data flow belongs to; the terminal address or the terminal identifier is used to identify a terminal to which the service data flow belongs or a target terminal; the AF application identification information is used to identify an application to which the service data flow belongs or a target application; the description information of the service data flow is used to describe information such as a protocol, a port, an address, etc. involved in the service data flow; the QoS parameter of the service data flow is used to describe a QoS requirement or characteristic of the service data flow; and the DNN and the S-NSSAI are used to a target data network and a target network slice to which the service data flow belongs, which ensures that the first information includes richer and more complete information related to the service data flow, and makes the analysis based on the first information more accurate and reasonable.

According to a second aspect, the embodiments of the present disclosure provide a method for processing information, performed by a PCF network element, including: receiving, by the PCF network element, first information, in which the first information includes QoS requirement information and encryption indication information of a service data flow, configured for an RAN element to perform PDU set based handling; determining, by the PCF network element, a policy control and charging (PCC) rule of the service data flow based on the QoS requirement information and the encryption indication information; and sending, by the PCF network element, the PCC rule to a session management function (SMF) network element.

In the above embodiments, after receiving the first information, the PCF determines the PCC rule based on more complete first information, i.e., the QoS requirement information and the encryption indication information, which ensures accuracy of the PCC rule.

In some embodiments in combination with the second aspect, in some embodiments, the method further includes: sending, by the PCF network element, the encryption indication information to the SMF network element.

In the above embodiments, the PCF network element sends the encryption indication information to the SMF network element, so that the SMF network element may determine the QoS rule of the service data flow based on the encryption indication information, and facilitate transmission of the encryption indication information to the UPF network element and the RAN network element.

In some embodiments in combination with the second aspect, in some embodiments, the method further includes: carrying, by the PCF network element, the encryption indication information in the PCC rule, and sending the encryption indication information to the SMF network element via the PCC rule.

In the above embodiments, by sending the encryption indication information via the PCC rule, with relatively diverse means for sending the encryption indication information, successful sending of the encryption indication information is ensured.

In some embodiments in combination with the second aspect, in some embodiments, the encryption indication information includes at least one of: first indication information indicating whether the service data flow is encrypted; second indication information indicating whether the service data flow supports the encrypted PDU set based handling; third indication information indicating an encrypted mode of a header of the service data flow, in which the encrypted mode includes a fully encrypted header and a partially encrypted header; fourth indication information indicating whether the service data flow supports an encrypted proxy; fifth indication information indicating whether the service data flow is E2E encryption; sixth indication information indicating whether the service data flow prioritizes execution of the encrypted PDU set based handling; or description information related to an encryption protocol of the service data flow.

In some embodiments in combination with the second aspect, in some embodiments, the method further includes: receiving, by the PCF network element, the first information sent by an AF network element; or receiving, by the PCF network element, the first information sent by a network exposure function (NEF) network element.

In the above embodiments, the first information may be obtained using a plurality of methods. The PCF network element receives the first information sent by the AF network element, so as to directly obtain a description of a QoS requirement and an encryption requirement of the service data flow of the AF network element; and the PCF network element receives the first information sent by the NEF network element, so as to obtain a processing result of the QoS requirement and the encryption requirement of the service data flow of the NEF network element, which ensures stable transmission of the first information.

In some embodiments in combination with the second aspect, in some embodiments, the method further includes: sending, by the PCF network element, the encryption indication information to the SMF network element via a session management (SM) association modification request.

In the above embodiments, the PCF network element sends the encryption indication information to the SMF network element via the SM association modification request, so as to update understanding of the SMF network element on the QoS rule and the encryption requirement of the service data flow during a session management process, and timely adjust processing of the QoS rule and the encryption requirement of the service data flow by the SMF network element.

In some embodiments in combination with the second aspect, in some embodiments, the first information carries description information of a specific protocol, the description information of the specific protocol is configured to implicitly transmit the encryption indication information, and the method further includes: determining, by the PCF network element, the encryption indication information based on the description information of the specific protocol.

According to a third aspect, the embodiments of the present disclosure provide a method for processing information, performed by an SMF network element, including: receiving, by the SMF network element, a PCC rule and encryption indication information of a service data flow, and determining a QoS rule of the service data flow based on the PCC rule and the encryption indication information; and sending, by the SMF network element, second information to a user plane function (UPF) network element, in which the second information includes at least one of the QoS rule or the encryption indication information, in which the QoS rule includes a PDU set QoS parameter of the service data flow.

In the above embodiments, determining the QoS rule and a QoS configuration parameter based on the PCC rule and the encryption indication information ensures accuracy of extracting the QoS rule and the QoS configuration parameter; and transmitting the QoS rule, the QoS configuration parameter, and the encryption indication information to the UPF network element provides a good foundation for a subsequent analysis.

In some embodiments in combination with the third aspect, in some embodiments, the method further includes: sending, by the SMF network element, a first response message to a PCF network element.

In some embodiments in combination with the third aspect, in some embodiments, the method further includes: initiating, by the SMF network element, an N4 session modification request to the UPF network element, and sending the second information via the N4 session modification request.

In the above embodiments, sending the second information based on the N4 session modification request provides diversified methods for sending the second information.

In some embodiments in combination with the third aspect, in some embodiments, the method further includes: receiving, by the SMF network element, a second response message sent by the UPF network element.

In some embodiments in combination with the third aspect, in some embodiments, the encryption indication information includes at least one of: first indication information indicating whether the service data flow is encrypted; second indication information indicating whether the service data flow supports encrypted PDU set based handling; third indication information indicating an encrypted mode of a header of the service data flow, in which the encrypted mode includes a fully encrypted header and a partially encrypted header; fourth indication information indicating whether the service data flow supports an encrypted proxy; fifth indication information indicating whether the service data flow is E2E encryption; sixth indication information indicating whether the service data flow prioritizes execution of encrypted PDU set based handling; or description information related to an encryption protocol of the service data flow.

In some embodiments in combination with the third aspect, in some embodiments, the encryption indication information is carried in the PCC rule or carried in other third information.

In some embodiments in combination with the third aspect, in some embodiments, the SMF network element sends the second information to an RAN network element via an access and mobility management function (AMF) network element.

According to a fourth aspect, the embodiments of the present disclosure provide a method for processing information, performed by a UPF network element, including: receiving, by the UPF network element, encryption indication information of a service data flow; identifying and determining, by the UPF network element, PDU set information from an extension header of the service data flow based on the encryption indication information; and sending, by the UPF network element, the PDU set information to an RAN network element.

In the above embodiments, the UPF network element determines the PDU set information based on received information, which ensures accuracy of obtaining the PDU set information, and then sends the PDU set information to the RAN network element, so as to facilitate subsequent processing based on the PDU set information.

In some embodiments in combination with the fourth aspect, in some embodiments, sending, by the UPF network element, the PDU set information to the RAN network element includes: sending, by the UPF network element, the PDU set information to the RAN network element by carrying the PDU set information in an extension header of the service data flow and sending to the RAN network element; or sending, by the UPF network element, fourth information, in which the fourth information includes the PDU set information.

In some embodiments in combination with the fourth aspect, in some embodiments, sending the fourth information to the RAN network element includes: sending, by the UPF network element, the encryption indication information to the RAN network element.

In some embodiments in combination with the fourth aspect, in some embodiments, the method further includes: sending, by the UPF network element, the encryption indication information to the RAN network element in the extension header.

In some embodiments in combination with the fourth aspect, in some embodiments, the method further includes: receiving, by the UPF network element, a QoS rule of the service data flow, in which the QoS rule includes a PDU set QoS parameter of the service data flow; and sending, by the UPF network element, fifth information to the RAN network element, in which the fifth information includes the QoS rule.

In some embodiments in combination with the fourth aspect, in some embodiments, the method further includes: receiving, by the UPF network element, the encryption indication information sent by an application server (AS) directly or by an NEF network element; and receiving, by the UPF network element, the QoS rule sent by an SMF network element.

In some embodiments in combination with the fourth aspect, in some embodiments, the method further includes: receiving, by the UPF network element, second information sent by an SMF network element, in which the second information includes the encryption indication information and the QoS rule.

In some embodiments in combination with the fourth aspect, in some embodiments, the encryption indication information includes at least one of: first indication information indicating whether the service data flow is encrypted; second indication information indicating whether the service data flow supports encrypted PDU set based handling; third indication information indicating an encrypted mode of a header of the service data flow, in which the encrypted mode includes a fully encrypted header and a partially encrypted header; fourth indication information indicating whether the service data flow supports an encrypted proxy; fifth indication information indicating whether the service data flow is E2E encryption; sixth indication information indicating whether the service data flow prioritizes execution of encrypted PDU set based handling; or description information related to an encryption protocol of the service data flow.

In some embodiments in combination with the fourth aspect, in some embodiments, the method further includes: receiving, by the UPF network element, the service data flow sent by an AS; and sending, by the UPF network element, the service data flow to the RAN network element.

According to a fifth aspect, the embodiments of the present disclosure provide a method for processing information, performed by an NEF network element, including: receiving, by the NEF network element, first information sent by an AF network element, in which the first information includes QoS requirement information and encryption indication information of a service data flow, configured for an RAN element to perform encrypted PDU set based handling; and sending, by the NEF network element, the first information to a PCF network element.

In the above embodiments, the first information may be sent based on the NEF network element, so that the first information may be successfully sent to the PCF regardless of whether an AF is trusted or untrusted, which ensures stability and accuracy of receiving the first information by the PCF.

In some embodiments in combination with the fifth aspect, in some embodiments, the encryption indication information includes at least one of: first indication information indicating whether the service data flow is encrypted; second indication information indicating whether the service data flow supports the encrypted PDU set based handling; third indication information indicating an encrypted mode of a header of the service data flow, in which the encrypted mode includes a fully encrypted header and a partially encrypted header; fourth indication information indicating whether the service data flow supports an encrypted proxy; fifth indication information indicating whether the service data flow is E2E encryption; sixth indication information indicating whether the service data flow prioritizes execution of the encrypted PDU set based handling; or description information related to an encryption protocol of the service data flow.

In some embodiments in combination with the fifth aspect, in some embodiments, the method further includes: sending, by the NEF network element, the encryption indication information to a UPF network element.

According to a sixth aspect, the embodiments of the present disclosure provide a method for processing information, performed by an RAN network element, including: receiving, by the RAN network element, PDU set information of a service data flow sent by a UPF network element; receiving, by the RAN network element, a QoS rule of the service data flow, in which the QoS rule includes a PDU set QoS parameter of the service data flow; and performing, by the RAN network element, PDU set based handling on a received service data flow based on the PDU set information and the QoS rule.

In the above embodiments, the RAN network element performs PDU set based handling on the received service data flow based on fourth information and fifth information, which solves a problem in the related art that it is unable to support PDU set based handling of an encrypted application service data flow.

In some embodiments in combination with the sixth aspect, in some embodiments, the method further includes: receiving, by the RAN network element, the service data flow sent by the UPF network element.

In some embodiments in combination with the sixth aspect, in some embodiments, receiving, by the RAN network element, the PDU set information of the service data flow includes: determining, by the RAN network element, the PDU set information from an extension header of the service data flow; or receiving, by the RAN network element, fourth information sent by the UPF network element, in which the fourth information includes the PDU set information.

In some embodiments in combination with the sixth aspect, in some embodiments, receiving, by the RAN network element, the QoS rule of the service data flow includes: receiving, by the RAN network element, fifth information sent by the UPF network element, in which the fifth information includes the QoS rule and encryption indication information; or receiving, by the RAN network element, the QoS rule and encryption indication information forwarded by an AMF network element.

According to a seventh aspect, the embodiments of the present disclosure provide an AF network element, including: a transceiver module, configured to send first information to a PCF network element, in which the first information includes QoS requirement information and encryption indication information of a service data flow, configured for an RAN element to perform encrypted PDU set based handling.

According to an eighth aspect, the embodiments of the present disclosure provide a PCF network element, including: a transceiver module, configured to receive first information, in which the first information includes QoS requirement information and encryption indication information of a service data flow, configured for an RAN element to perform PDU set based handling; and send a PCC rule to an SMF network element; and a processing module, configured to determine the PCC rule of the service data flow based on the QoS requirement information and the encryption indication information.

According to a ninth aspect, the embodiments of the present disclosure provide an SMF network element, including: a transceiver module, configured to receive a PCC rule and encryption indication information of a service data flow, and determine a QoS rule of the service data flow based on the PCC rule and the encryption indication information, in which the QoS rule includes a PDU set QoS parameter of the service data flow; and send second information to a UPF network element, in which the second information includes at least one of the QoS rule or the encryption indication information.

According to a tenth aspect, the embodiments of the present disclosure provide a UPF network element, including: a transceiver module, configured to receive encryption indication information of a service data flow, and send PDU set information of the service data flow to an RAN network element; and a processing module, configured to identify and determine the PDU set information from an extension header of the service data flow based on the encryption indication information.

According to an eleventh aspect, the embodiments of the present disclosure provide an NEF network element, including: a transceiver module, configured to receive first information sent by an AF network element, in which the first information includes QoS requirement information and encryption indication information of a service data flow, configured for an RAN element to perform encrypted PDU set based handling; and send the first information to a PCF network element.

According to a twelfth aspect, the embodiments of the present disclosure provide an RAN network element, including: a transceiver module, configured to receive PDU set information of a service data flow sent by a UPF network element, and receive a QoS rule of the service data flow, in which the QoS rule includes a PDU set QoS parameter of the service data flow; and a processing module, configured to perform PDU set based handling on a received service data flow based on the PDU set information and the QoS rule.

According to a thirteenth aspect, the embodiments of the present disclosure provide a communication system, including: an AF network element, a PCF network element, an SMF network element, a UPF network element, an NEF network element, and an RAN network element, in which the AF network element is configured to implement the method for processing information according to the first aspect, the PCF network element is configured to implement the method for processing information according to the second aspect, the SMF network element is configured to implement the method for processing information according to the third aspect, the UPF network element is configured to implement the method for processing information according to the fourth aspect, the NEF network element is configured to implement the method for processing information according to the fifth aspect, and the RAN network element is configured to implement the method for processing information according to the sixth aspect.

According to a fourteenth aspect, the embodiments of the present disclosure provide a storage medium for storing instructions. When the instructions are running on a communication device, the communication device is caused to perform the method for processing information according to any one of the first aspect, the second aspect, the third aspect, the fourth aspect, the fifth aspect, or the sixth aspect.

According to a fifteenth aspect, the embodiments of the present disclosure provide a program product. When the program product is executed by a communication device, the communication device is caused to perform the method in the optional implementations of the first aspect, the second aspect, the third aspect, the fourth aspect, the fifth aspect, or the sixth aspect.

According to a sixteenth aspect, the embodiments of the present disclosure provide a computer program. When the computer program is running on a computer, the computer is caused to perform the method in the optional implementations of the first aspect, the second aspect, the third aspect, the fourth aspect, the fifth aspect, or the sixth aspect.

According to a seventeenth aspect, the embodiments of the present disclosure provide a chip or a chip system, including a processing circuit, configured to perform the method in the optional implementations according to the first aspect, the second aspect, the third aspect, the fourth aspect, the fifth aspect, or the sixth aspect.

It may be understood that the AF network element, the PCF network element, the SMF network element, the UPF network element, the NEF network element, the RAN network element, the communication system, the storage medium, the program product, the computer program, and the chip or the chip system are all used to perform the methods in the embodiments of the present disclosure. Therefore, for beneficial effects that may be achieved, reference may be made to the beneficial effects in the corresponding methods, which are not repeated here.

The embodiments of the present disclosure provide a method for processing information, a network element, a system, and a storage medium. In some embodiments, terms such as method for processing information and communication method may be interchangeable.

The embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "above", "said", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "comprising A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus" and "device" may be interpreted as either physical or virtual. Names are not limited to those recorded in the embodiments. In some cases, they may be understood as "equipment", "device", "circuit", "network element", "node", "function", "unit", "section", "system", "network", "chip", "chip system", "entity", "subject", etc. may be used interchangeably.

In some embodiments, "network" may be interpreted as a device included in a network, for example, an access network device, a core network device, etc.

In some embodiments, "access network device (AN device)" may also be called "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

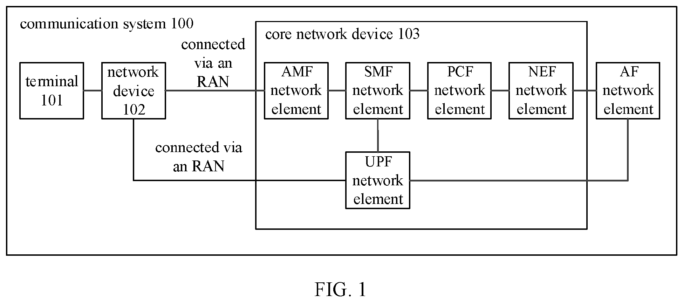

FIG. 1 is a schematic diagram of an architecture of a communication system 100 according to an embodiment of the present disclosure.

As shown in FIG. 1, the communication system 100 may include a terminal 101 and a network device 102.

In some embodiments, the terminal 101 includes, for example, at least one of a mobile phone, a wearable device, an Internet of Things device, or a car with a communication function, a smart car, a Pad, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some embodiments, the network device 102 may include at least one of an access network device or a core network device.

In some embodiments, the access network device 102 is, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited herein.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction between these internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

In some embodiments, the core network device may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

The core network device includes the following network elements: a PCF network element; an NEF network element; a UPF network element; an SMF network element; and an RAN network element. In some embodiments, the core network device may further include: an AF network element; and an AMF network element.

It may be understood that the communication system in the embodiments of the present disclosure is to clearly illustrate the technical solution of embodiments of the present disclosure, and does not constitute a limitation on the technical solution in the embodiments of the present disclosure. Those skilled in the art may know, with evolution of the system architecture and emergence of new service scenarios, the technical solution in the embodiments of the disclosure is also applicable to similar technical problems.

The following embodiments of the present disclosure may be applied to the communication system 100 shown in FIG. 1, or to some entities, which are not limited to this. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, the combination of a plurality of systems (e.g., the combination of LTE or LTE-A with 5G) may be applied.

A mobile media service, cloud augmented reality (AR)/virtual reality (VR) and other extended reality (XR) services, cloud gaming, video-based remote control of machines or drones and other services are expected to contribute an increasing share of traffic to the 5G network. The XR services also involve multimodal data flows. Multimodal data describes data of the same service/application input from the same device or different devices (including sensors), and these data may be output to one or more destination terminals. There is often a certain or even strong correlation among data flows within the multimodal data, such as synchronization between an audio flow and a video flow, synchronization between touch and vision, etc. Data flows of such media services themselves, different data flows, and requirements on network transmission of these service data flows all share some common characteristics. Effective identification and utilization of these characteristics may be conducive to transmission and control of the network and the service, and also conducive to service guarantee and user experience.

An XRM service and an interactive media service require the 5th generation system (5GS) to comprehensively consider QoS characteristics of service-related data flows, for example, whether parameters such as a delay-critical guaranteed bit rate (GBR) data flow, a guaranteed flow bit rate (GFBR), a packet delay budget (PDB), and a maximum data burst volume (MDBV) may be simultaneously satisfied and coordinate with each other consistently. This involves consistency guarantee of QoS authorization and execution among a plurality of XRM data flows of one user equipment (UE) and XRM data flows of a plurality of terminals.

The current 5G system supports function enhancement of an AF for handling per PDU set of an XRM service data flow, to support QoS perception and guarantee enhancement of the AF for the XRM service data flow and user quality of experience (QoE) enhancement. This includes providing a PDU set-specific QoS characteristic and protocol description by the AF: PDU set-specific QoS characteristic; a PDU set delay budget (PSDB); a PDU set error rate (PSER); and PDU set integrated handling information (PSIHI).

The SMF and the UPF may, according to protocol description and a protocol header extension provided by the AF, execute a general packet radio service tunnelling protocol for a user plane (GTP-U) header extension for a corresponding PDU in a corresponding service data flow (SDF) PDU set, and carry PDU set information. The PDU set information is used by a next generation-radio access network (NG-RAN) for PDU set based QoS handling. The PDU set information includes: a PDU set sequence number; an indication of an end PDU of the PDU set; a PDU sequence number within the PDU set; a PDU set size; and PDU set importance, used to identify relative importance of the PDU set compared to other PDU sets within a QoS flow.

An RAN may perform PDU set based handling based on the PDU set specific QoS characteristic and the protocol description provided by a 5G core (5GC) and the AF, and an enhanced header identified and marked by the UPF.

However, currently, the 5GS only supports PDU set based handling for a non-encrypted application service data flow. In actual application deployment, a vast majority of service data flows are encrypted flows. The current 5GS is unable to support PDU set handling for these encrypted service data flows, unable to correctly identify and mark the PDU set information of the encrypted data flows, and unable to realize functions such as QoS handling and congestion control at a PDU set level.

How the 5GS supports QoS control and a PDU set identification for an E2E encrypted XR data flow is a problem to be solved in the present disclosure.

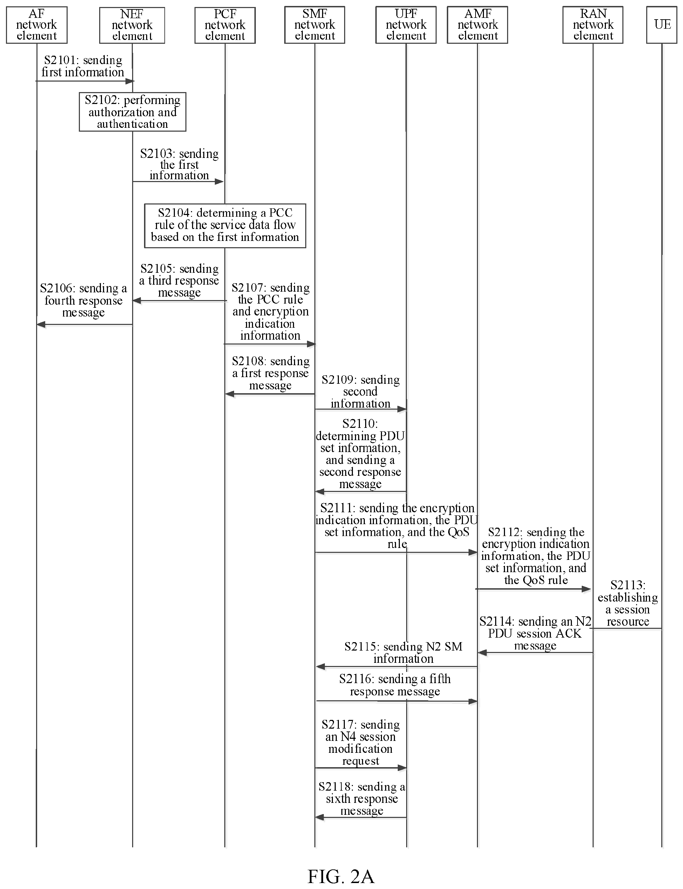

FIG. 2A is an interaction diagram of a method for processing information according to an embodiment of the present disclosure. As shown in FIG. 2A, embodiments of the present disclosure relate to a method for processing information, including the following steps at S2101 to S2118.

At S2101, an AF network element sends first information to an NEF network element.

In some embodiments, in a case that the AF network element is a non-trusted AF network element, the AF network element may send the first information to a PCF network element via the NEF network element.

In some embodiments, the AF network element may send the first information to the NEF network element via a new message.

In some embodiments, the AF network element may send the first information to the NEF network element via an existing message.

In some embodiments, the AF network element may send the first information to the NEF network element via an AF QoS request. That is, the first information is carried in the AF QoS request, and the AF network element sends the AF QoS request to the NEF network element, realizing sending the first information to the NEF network element.

In some embodiments, the AF network element sends the first information to the NEF network element via an AF QoS update message. That is, the AF QoS update message may carry the first information, and the AF network element sends the AF QoS request or the AF QoS update message to the NEF network element, realizing sending the first information to the NEF network element.

In some embodiments, the AF network element may send the first information to the NEF network element during an AF session creation process. Optionally, the AF network element may send the first information to the NEF network element via a create request of an AF session with QoS (Nnef_AFsessionWithQoS_Create request). That is, the Nnef_AFsessionWithQoS_Create request may carry the first information, and the AF network element sends the Nnef_AFsessionWithQoS_Create request to the NEF network element, realizing sending the first information to the NEF network element.

In some embodiments, terms such as "AF QoS", "application function quality of service", and "application function QoS" may be used interchangeablely.

In some embodiments, the first information may include but is not limited to: QoS requirement information and encryption indication information of a service data flow, for an RAN network element to perform encrypted PDU set based handling. Optionally, the NEF network element receives the first information, that is, receives the QoS requirement information and the encryption indication information of the service data flow, for the RAN network element to perform the encrypted PDU set based handling.

In some embodiments, the name of the first information is not limited. For example, the first information may be "service data flow information", "QoS requirement information of a service data flow", or "encryption indication information", etc. Optionally, in some embodiments, the first information further includes at least one of: service information of an XRM service; a terminal address or a terminal identifier; AF application identifier information; description information of the service data flow; a QoS parameter of the service data flow; or a DNN and S-NSSAI.

In some embodiments, the QoS requirement information of the service data flow may include but is not limited to: a QoS parameter, in which the QoS parameter may include but is not limited to: a 5G QoS identifier (5GQI); an allocation and retention priority (ARP); a reflective QoS attribute (RQA); notification control; a flow bit rate; an aggregate bit rate; a default value; a maximum packet loss rate; a QoS PDU set parameter, which may include but is not limited to: a PDU set-specific QoS characteristic; a PSDB; a PSER; and PSIHI.

In some embodiments, the encryption indication information may indicate whether the service data flow is encrypted.

In some embodiments, the encryption indication information may include at least one of: first indication information indicating whether the service data flow is encrypted; second indication information indicating whether the service data flow supports the encrypted PDU set based handling; third indication information indicating an encrypted mode of a header of the service data flow, in which the encrypted mode includes a fully encrypted header and a partially encrypted header; fourth indication information indicating whether the service data flow supports an encrypted proxy; fifth indication information indicating whether the service data flow is E2E encryption; sixth indication information indicating whether the service data flow prioritizes execution of the encrypted PDU set based handling; or description information related to an encryption protocol of the service data flow.

In some embodiments, the AF network element may implicitly indicate the encryption indication information. For example, the AF network element may send protocol description information, in which the protocol description information carries the encryption indication information. That is, the first information may carry the protocol description information to implicitly indicate the encryption indication information.

Optionally, the first indication information indicates whether the service data flow is encrypted. For example, if a value of the first indication information is "1", it may indicate that the service data flow is encrypted; and if a value of the first indication information is "0", it may indicate that the service data flow is not encrypted. A name of the first indication information is not limited. For example, the first indication information may be "information indicating whether the service data flow is encrypted", "first encryption indication information", etc.

Optionally, the second indication information indicates whether the service data flow supports encrypted PDU set based handling. For example, if a value of the second indication information is "1", it may indicate that the service data flow supports the encrypted PDU set based handling; and if a value of the first indication information is "0", it may indicate that the service data flow does not support the encrypted PDU set based handling. A name of the second indication information is not limited. For example, the second indication information may be "information indicating whether the encrypted PDU set based handling is supported", "second encryption indication information", etc.

Optionally, the third indication information indicates an encrypted mode of a header of the service data flow, for example, fully header encryption or partially header encryption. For example, if a value of the third indication information is "1", it may indicate that the encrypted mode of the header of the service data flow is fully header encryption; and if a value of the third indication information is "0", it may indicate that the encrypted mode of the header of the service data flow is partially header encryption. A name of the third indication information is not limited. For example, the third indication information may be "encrypted mode indication information", "third encryption indication information", etc.

Optionally, the fourth indication information indicates whether the service data flow supports an encrypted proxy. For example, if a value of the fourth indication information is "1", it may indicate that the service data flow supports the encrypted proxy; and if a value of the fourth indication information is "0", it may indicate that the service data flow does not support the encrypted proxy. A name of the fourth indication information is not limited. For example, the fourth indication information may be "information indicating whether the encrypted proxy is supported", "fourth encryption indication information", etc.

Optionally, the fifth indication information indicates whether the service data flow is E2E encryption. For example, if a value of the fifth indication information is "1", it may indicate that the service data flow is the E2E encryption; and if a value of the fifth indication information is "0", it may indicate that the service data flow is not the E2E encryption. A name of the fifth indication information is not limited. For example, the fifth indication information may be "E2E encryption indication information", "end-to-end encryption indication information", or "fifth encryption indication information", etc.

Optionally, the sixth indication information indicates whether the service data flow preferentially performs encrypted PDU set based handling. For example, if a value of the sixth indication information is "1", it may indicate that the service data flow prioritizes execution of the encrypted PDU set based handling; and if a value of the sixth indication information is "0", it may indicate that the service data flow does not prioritize execution of the encrypted PDU set based handling. A name of the sixth indication information is not limited. For example, "sixth indication information" may be "priority execution feedback information", "priority execution indication information", or "sixth encryption indication information", etc.

In some embodiments, the service data flow may be a multimedia data flow provided by an application server, such as a video data flow, an audio data flow, etc. The service data flow may include but is not limited to a PDU and an SDF.

In some embodiments, related terms such as "encrypted indication information" and "encryption indication information" may be used interchangeably.

In some embodiments, the first information may further include but is not limited to at least one of: service information of an XRM service; a terminal address or a terminal identifier, in which the service information of an XRM service may include but is not limited to identifier information of a service data flow or a data flow group, such as a comprehensive service identifier (ID), which can be used to identify all data flows in a data flow group of the XRM service; AF application identifier information; description information of the service data flow; a QoS parameter of the service data flow; a DNN; or S-NSSAI.

At S2102, the NEF network element performs authorization and authentication.

In some embodiments, the NEF network element may perform the authorization and the authentication on an AF request sent by the AF, and determine, based on the parameter provided by the AF, whether to invoke a time sensitive communication and time synchronization function (TSCTSF) network element to perform information transmission with the PCF network element via the TSCTSF network element, or to directly interact information with the PCF network element. Optionally, the PCF network element may receive the first information provided by the AF network element from the NEF network element or the TSCTSF network element.

In some embodiments, the NEF network element may further perform at least one of the following related mapping operations: mapping of an XRM service identifier (AF-Service-Identifier) to the DNN and the S-NSSAI; mapping of an external application to a core network (CN) application identifier; mapping of an external UE identifier to a UE identifier within the CN (e.g., SUPI) based on unified data management (UDM) subscription information; or mapping of XRM service group identifiers from external to internal based on UDM subscription information.

At S2103, the NEF network element sends the first information to a PCF network element.

In some embodiments, the NEF network element sends the first information to the PCF network element. Optionally, the PCF network element receives the first information, that is, receives the QoS requirement information and the encryption indication information of the service data flow, for the RAN network element to perform the PDU set based handling.

In some embodiments, the NEF network element may send the first information to the PCF network element via a policy authorization create request (Npcf_Policy Authorization_Create request).

At S2104, the PCF network element determines a PCC rule of the service data flow based on the first information.

In some embodiments, the PCF network element may receive the first information sent by the NEF network element.

In some embodiments, the PCF network element determines the PCC rule of the service data flow based on the QoS requirement information and the encryption indication information in the first information. In some embodiments, the PCC rule may access QoS requirement information of a transport network bearer-level service to ensure data transmission, and may includes functions of service data flow detection, policy execution, and flow-based charging.

In some embodiments, the AF network element may implicitly indicate the encryption indication information. For example, related information in the encryption indication information may be carried in description information of a specified protocol. Optionally, the PCF network element may obtain the encryption indication information based on the protocol description information sent by the AF.

In some embodiments, terms such as "PCC rule", "policy control and charging rule", and "policy control and charging" may be used interchangeably.

At S2105, the PCF network element sends a third response message to the NEF network element.

In some embodiments, the PCF network element may send the third response message to the NEF network element via a policy authorization create response (Npcf_Policy Authorization_Create response).

At S2106, the NEF network element sends a fourth response message to the AF network element.

In some embodiments, the NEF network element may send the fourth response message to the AF network element via a create response for an AF session with a QoS (Nnef_AFsessionWithQoS Create response).

At S2107, the PCF network element sends the PCC rule and encryption indication information to an SMF network element.

In some embodiments, the PCF network element may carry the encryption indication information in the PCC rule, and send the encryption indication information to the SMF network element by sending the PCC rule.

In some embodiments, the PCF network element may directly send the encryption indication information to the SMF network element. Optionally, the encryption indication information is sent outside the PCC rule. For example, the encryption indication information may be carried in other third information, and the PCF network element sends the encryption indication information to the SMF network element by sending the third information.

In some embodiments, the third information may be a session management (SM) association modification request. Optionally, the PCF network element sends the encryption indication information to the SMF network element via the SM association modification request.

In some embodiments, a name of the third information is not limited. For example, the third information may be "an SM association modification request" or "a session management association modification request".

At S2108, the SMF network element sends a first response message to the PCF network element.

In some embodiments, the SMF network element sends the first response message to the PCF network element, in which the first response message indicates that the SMF network element receives the PCC rule sent by the PCF network element and/or the SMF network element receives the encryption indication information sent by the PCF network element.

Optionally, the SMF network element may send the first response message to the PCF network element via an SM policy control update notify response (Npcf_SM Policy Control_Update Notify response).

Optionally, a name of the first response message is not limited. For example, the first response message may be "Npcf_SM Policy Control_Update Notify response message", "reception feedback information", or "reception result information", etc.

At S2109, the SMF network element sends second information to a UPF network element.

In some embodiments, the SMF network element may send the second information to the UPF network element by sending an N4 session modification request to the UPF network element. It may be understood that the N4 session modification request carries the second information.

Optionally, the N4 session modification request is used for the SMF network element to control the UPF network element, and an N4 interface is a bridge between the SMF network element and the UPF network element.

In some embodiments, related terms such as "N4 session modification request" and "N4 session modifying request" may be used interchangeably.

In some embodiments, the second information may include a QoS rule and the encryption indication information. The QoS rule may include a QoS parameter of the service data flow. Optionally, the QoS parameter may include PDU set QoS parameter to perform the PDU set based handling on the service data flow. Optionally, the UPF network element receives the second information sent by the SMF network element, that is, the UPF network element receives the QoS rule, the QoS parameter, and the encryption indication information.

Optionally, a name of the second information is not limited. For example, the second information may be "QoS information and encryption indication information".

In some embodiments, the UPF network element may further receive the encryption indication information directly sent by an AS.

Optionally, the UPF network element may receive the encryption indication information sent by the SMF network element, or receive the encryption indication information sent by the NEF network element, or receive the encryption indication information directly sent by the AS.

In some embodiments, the UPF network element may identify and determine PDU set information from an extension header of the service data flow based on the encryption indication information.

In some embodiments, the extension header may be a general packet radio service tunnelling protocol for the user plane (GTP-U).

At S2110, the UPF network element determines PDU set information based on the encryption indication information, and sends a second response message to the SMF network element.

In some embodiments, the UPF network element sends the second response message to the SMF network element, in which the second response message indicates that the UPF network element receives the second information sent by the SMF network element.

In some embodiments, the PDU set information may include but is not limited to: a PDU set sequence number; an indication of an end PDU of the PDU set; a PDU sequence number within the PDU set; a PDU set size; and PDU set importance, used to identify relative importance of the PDU set compared to other PDU sets within a QoS flow.

In some embodiments, the second response message may include but is not limited to: the encryption indication information, the PDU set information, and the QoS rule.

Optionally, the second response message may be sent to the SMF network element via an N4 session modification response.

Optionally, a name of the second response message is not limited. For example, the second response message may be "reception success message", "reception feedback message", or "second information reception success message", etc.

At S2111, the SMF network element sends the encryption indication information, the PDU set information, and the QoS rule to an AMF network element.

At S2112, the AMF network element sends the encryption indication information, the PDU set information, and the QoS rule to an RAN network element.

In some embodiments, the (R)AN network element may perform the PDU set based handling on a received service data flow based on the encryption indication information, the PDU set information, and the QoS rule.

In some embodiments, the QoS rule may be sent to the RAN network element via a control plane path, that is, the SMF network element may forward the QoS rule to the RAN network element via the AMF network element. Optionally, the RAN network element receives the QoS rule forwarded by the AMF network element.

In some embodiments, the PDU set information may be sent via a user plane path. For example, the PDU set information may be carried in the extension header of the service data flow, that is, the UPF network element sends the PDU set information to the RAN network element via the extension header of the service data flow. Optionally, the RAN network element receives the PDU set information sent by the UPF network element via the extension header.

It may be understood that the RAN network element receives general information for the QoS flow from the AMF network element (i.e., via the control plane path), and receives PDU set information for each service data flow (set data packet) from the UPF network element (i.e., via the user plane path).

In some embodiments, the UPF network element may send the PDU set information to the RAN network element via fourth information, and send the QoS rule to the RAN network element via fifth information. It may be understood that the RAN network element may receive the PDU set information and the QoS rule from two pieces of information respectively. It needs to be noted that the PDU set information and the QoS rule are received at different time points. For example, the PDU set information may be delivered along with the service data flow, while the QoS rule may be obtained from a server of the UPF network element before the service data flow is delivered.

In some embodiments, the PDU set based handling may be dropping some PDUs or prioritizing processing PDUs, etc.

In some embodiments, the AMF network element may send an N2 message to the (R)AN, and send the encryption indication information, the PDU set information, and the QoS rule to the RAN network element via the N2 message.

Optionally, the N2 message may include but is not limited to: N2 SM information received from the SMF network element, and a non-access stratum (NAS) message, in which the NAS message may include but is not limited to: a PDU session ID or an N1 SM container (e.g., PDU session modification command).

The embodiments of the present disclosure may further include the following steps at S2113 to S2118.

At S2113, the RAN network element establishes a session resource with a UE.

At S2114, the RAN network element sends an N2 PDU session acknowledgement (ACK) message to the AMF.

In some embodiments, the (R)AN may acknowledge an N2 PDU session request via the N2 PDU session ACK message by sending the N2 PDU session ACK message to the AMF.

In some embodiments, the (R)AN sends the N2 SM information to the AMF. Optionally, the N2 SM information may be carried by the ACK message.

At S2115, the AMF network element sends N2 SM information to the SMF.

In some embodiments, the AMF forwards the N2 SM information received from the (R)AN network element to the SMF network element via a PDU session update SM context request (Nsmf_PDU Session_Update SM Context Request) service operation.

At S2116, the SMF network element sends a fifth response message to the AMF network element.

In some embodiments, the SMF network element sends the fifth response message to the AMF network element using a PDU session update SM context response (Nsmf_PDU Session_Update SM Context respond).

At S2117, the SMF network element sends an N4 session modification request to the UPF network element.

At S2118, the UPF network element sends a sixth response message to the SMF network element.

In some embodiments, an N4 session modification request message is used to update an N4 session of the UPF in PDU session modification.

The method for processing information in the embodiments of the present disclosure may include at least one of S2101 to S2118. For example, S2101 may be implemented as an independent embodiment, S2102 may be implemented as an independent embodiment, the combination of S2101, S2102, S2103, S2104, S2105, and S2106 may be implemented as an independent embodiment, and the combination of S2107, S2108, S2109, and S2110 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

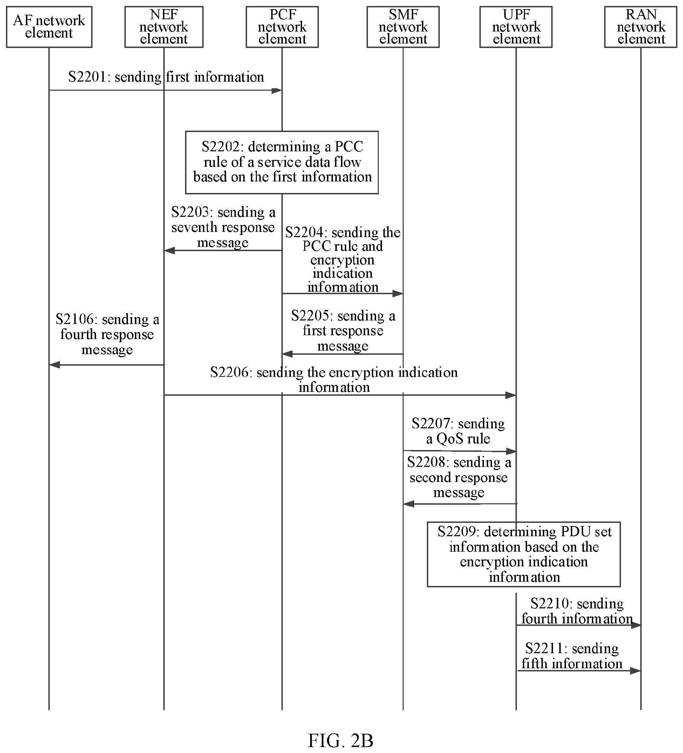

FIG. 2B is an interaction diagram of a method for processing information according to an embodiment of the present disclosure. As shown in FIG. 2B, embodiments of the present disclosure relate to a method for processing information, including the following steps at S2201 to S2211.

At S2201, an AF network element sends first information to a PCF network element.

In some embodiments, in a case that the AF network element is a trusted AF network element, the AF network element may directly send the first information to the PCF network element.

In some embodiments, the AF network element may send the first information to the PCF network element via a new message.

In some embodiments, the AF network element may send the first information to the PCF network element via an existing message.

In some embodiments, the AF network element may send the first information to the NEF network element via an AF QoS request. That is, the first information is carried in the AF QoS request, and the AF network element sends the AF QoS request to the NEF network element, realizing sending the first information to the NEF network element.

In some embodiments, the AF network element sends the first information to the NEF network element via an AF QoS update message. That is, the AF QoS update message may carry the first information, and the AF network element sends the AF QoS request or the AF QoS update message to the NEF network element, realizing sending the first information to the NEF network element.

In some embodiments, the AF network element may send the first information to the NEF network element during an AF session creation process. Optionally, the AF network element may send the first information to the NEF network element via an AF session create request (Nnef_AFsessionWithQoS_Create request). That is, the Nnef_AFsessionWithQoS_Create request may carry the first information, and the AF network element sends the Nnef_AFsessionWithQoS_Create request to the NEF network element, realizing sending the first information to the NEF network element.

For S2201, reference may be made to S2101 in FIG. 2A and other related parts in the embodiments in FIG. 2A, which is not repeated here.

At S2202, the PCF network element determines a PCC rule of a service data flow based on the first information.

For optional implementations of S2202, reference may be made to S2104 in FIG. 2A and other related parts in the embodiments in FIG. 2A, which is not repeated here.

At S2203, the PCF network element sends a seventh response message to the AF.

In some embodiments, the PCF network element may send the seventh response message to the AF via an existing message.

In some embodiments, the PCF network element may send the seventh response message to the AF via a new message.

In some embodiments, the seventh response message indicates that the PCF network element receives the first information sent by the AF network element. Optionally, a name of the seventh response message is not limited. For example, the seventh response message may also be "reception success message", "reception feedback message", or "first information reception success message", etc.

At S2204, the PCF network element sends the PCC rule and encryption indication information to an SMF network element.

At S2205, the SMF network element sends a first response message to the PCF network element.

For optional implementations of S2204 to S2205, reference may be made to S2107 and S2108 in FIG. 2A and other related parts in the embodiments of FIG. 2A, which is not repeated here.

At S2206, the UPF network element receives the encryption indication information sent directly by an AS or via an NEF network element.

At S2207, the SMF network element sends a QoS rule to the UPF network element.

In some embodiments, the SMF network element may send the QoS rule to the UPF network element by sending a second message to the UPF network element. It may be understood that the second message carries the QoS rule.

In some embodiments, the SMF network element may send the QoS rule to the UPF network element by sending an N4 session modification request to the UPF network element. It may be understood that the N4 session modification request carries the QoS rule.

At S2208, the UPF network element sends a second response message to the SMF network element.

At S2209, the UPF network element determines PDU set information based on the encryption indication information.

For optional implementations of S2208 to S2209, reference may be made to S2110 in FIG. 2A and other related parts in the embodiments in FIG. 2A, which is not repeated here.

At S2210, the UPF network element sends fourth information to an RAN network element.

In some embodiments, the fourth information may include the PDU set information.

In some embodiments, the fourth information may further include the encryption indication information. Optionally, the RAN network element receives the fourth information, that is, the RAN network element receives the PDU set information and the encryption indication information.

In some embodiments, the UPF network element may send the encryption indication information to the RAN network element in an extension header. That is, the extension header carries the encryption indication information, and the UPF network element sends the encryption indication information to the RAN network element by sending the extension header.

Optionally, a name of the fourth information is not limited. For example, the fourth information may be "extension header information", "PDU set information and encryption indication information", etc.

At S2211, the UPF network element sends fifth information to the RAN network element.

In some embodiments, the fifth information includes the QoS rule, and the QoS rule may include a QoS parameter. Optionally, the RAN network element receives the fifth information, that is, the RAN network element determines the QoS rule and the QoS parameter based on the fifth information.

Optionally, a name of the fifth information is not limited. For example, the fifth information may be "QoS information", "QoS rule and QoS configuration parameter information", or "quality of service information", etc.

In some embodiments, the (R)AN network element may perform PDU set based handling on a received service data flow based on the encryption indication information, the PDU set information, and the QoS rule.

The method for processing information in the embodiments of the present disclosure may include at least one of S2201 to S2211. For example, S2201 may be implemented as an independent embodiment, S2202 may be implemented as an independent embodiment, the combination of S2201 and S2202 may be implemented as an independent embodiment, and the combination of S2204, S2205, S2206, and S2207 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

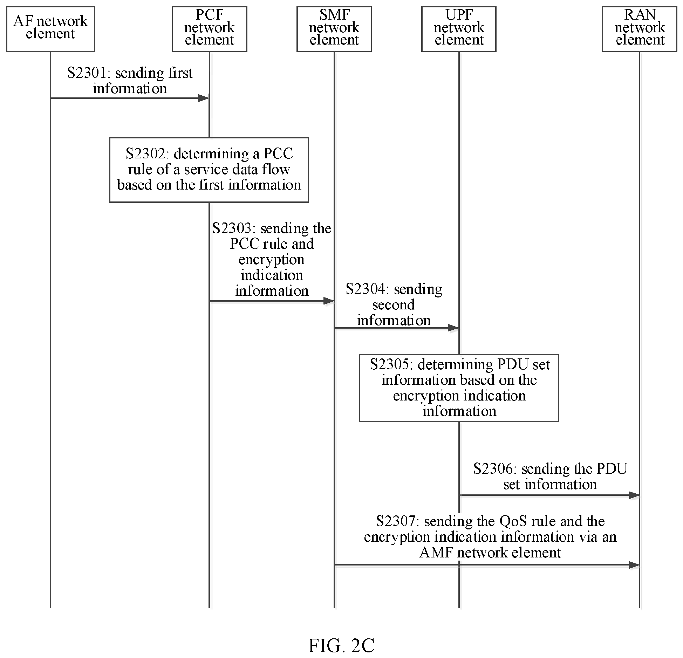

FIG. 2C is an interaction diagram of a method for processing information according to an embodiment of the present disclosure. As shown in FIG. 2C, embodiments of the present disclosure relate to a method for processing information, including the following steps at S2301 to S2307.

At S2301, an AF network element sends first information to a PCF network element.

In some embodiments, if the AF network element is a trusted AF network element, the AF network element may directly send the first information to the PCF network element.

In some embodiments, if the AF network element is a non-trusted AF network element, the AF network element may send the first information to the PCF network element via an NEF network element.

At S2302, the PCF network element determines a PCC rule of a service data flow based on the first information.

At S2303, the PCF network element sends the PCC rule and encryption indication information to an SMF network element.

At S2304, the SMF network element sends second information to a UPF network element.

At S2305, the UPF network element determines PDU set information based on the encryption indication information.

For optional implementations of S2301 to S2305, reference may be made to S2101 to S2111 in FIG. 2A and other related parts in the embodiments in FIG. 2A, which is not repeated here.

At S2306, the UPF network element sends the PDU set information to an RAN network element.

At S2307, the SMF network element sends the QoS rule and the encryption indication information to the RAN network element via an AMF network element.

For optional implementations of S2306 to S2307, reference may be made to S2210 and S2211 in FIG. 2B and other related parts in the embodiments in FIG. 2B, which is not repeated here.

The method for processing information in the embodiments of the present disclosure may include at least one of S2301 to S2307. For example, S2301 may be implemented as an independent embodiment, S2302 may be implemented as an independent embodiment, the combination of S2301 and S2302 may be implemented as an independent embodiment, and the combination of S2301, S2302, S2303, and S2304 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

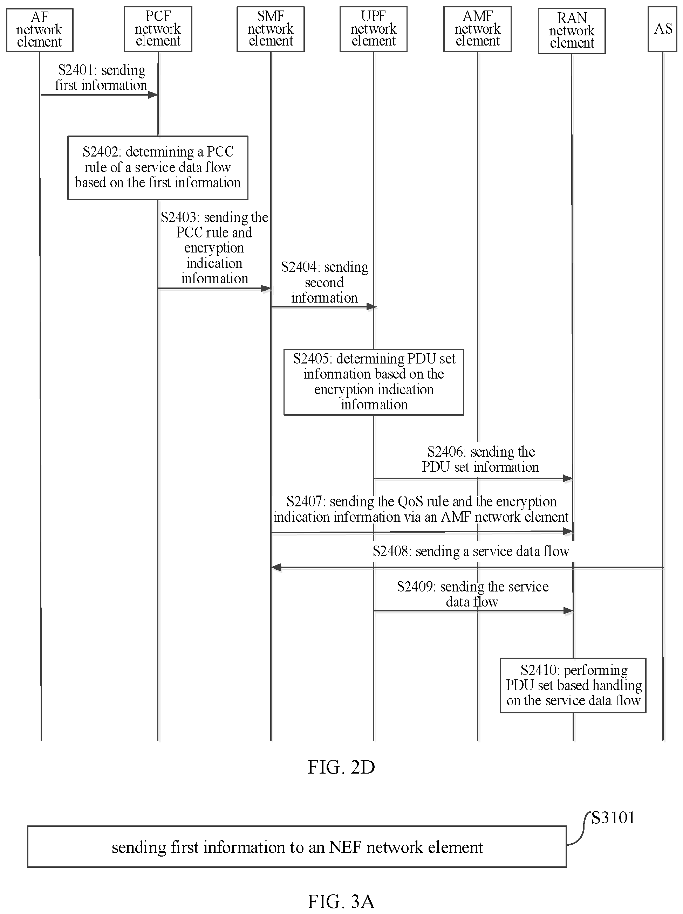

FIG. 2D is an interaction diagram of a method for processing information according to an embodiment of the present disclosure. As shown in FIG. 2D, embodiments of the present disclosure relate to a method for processing information, including the following steps at S2401 to S2410.

At S2401, an AF network element sends first information to a PCF network element.

At S2402, the PCF network element determines a PCC rule of a service data flow based on the first information.

At S2403, the PCF network element sends the PCC rule and encryption indication information to an SMF network element.

At S2404, the SMF network element sends second information to a UPF network element.

At S2405, the UPF network element determines PDU set information based on the encryption indication information.

At S2406, the UPF network element sends the PDU set information to an RAN network element.

At S2407, the SMF network element sends the QoS rule and the encryption indication information to the RAN network element via an AMF network element.

For optional implementations of S2401 to S2407, reference may be made to S2104, S2107, S2109, S2110 in FIG. 2A, S2201 in FIG. 2B, S2306 and S2307 in FIG. 2C, and other related parts in the embodiments in FIG. 2A, FIG. 2B, and FIG. 2C, which is not repeated here.

At S2408, an AS sends a service data flow to the UPF network element.

In some embodiments, the AS directly sends the service data flow to the UPF network element. Optionally, the UPF network element receives the service data flow, so that the UPF network element implements a forwarding function of the service data flow.

At S2409, the UPF network element sends the service data flow to the RAN network element.

In some embodiments, the UPF network element sends a received service data flow to the RAN network element. Optionally, the RAN network element receives the service data flow sent by the UPF network element.

At S2410, the RAN network element performs PDU set based handling on the service data flow.

Optionally, the RAN network element receives the PDU set information, the QoS rule, and the QoS parameter based on the service data flow, and performs the PDU set based handling on the received service data flow.

The method for processing information in the embodiments of the present disclosure may include at least one of S2401 to S2410. For example, S2401 may be implemented as an independent embodiment, S2402 may be implemented as an independent embodiment, the combination of S2401 and S2402 may be implemented as an independent embodiment, and the combination of S2401, S2402, S2403, and S2404 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

In some embodiments, names of information are not limited to those specified in the embodiments. Terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", "chip", etc., may be used interchangeably.

In some embodiments, terms such as "synchronization signal (SS)", "synchronization signal block (SSB)", "reference signal (RS)", "pilot", "pilot signal", etc. may be used interchangeably.

In some embodiments, terms such as "time point", "time", "time position", etc. may be used interchangeably; and terms such as "duration", "period", "time window", "window", "time", etc. may be used interchangeably.

In some embodiments, "acquire", "obtain", "get", "receive", "transmit", "bidirectional transmission", "send and/or receive" may be used interchangeably, and they may be interpreted as receiving from another entity, obtaining from a protocol, obtaining from a higher layer, obtaining via processing by itself, autonomously implementing, and other meanings.

In some embodiments, terms such as "send", "report", "deliver", "transmit", "bidirectional transmission", "send and/or receive" may be used interchangeably.

In some embodiments, terms such as "certain", "preset", "predetermined", "set", "indicated", "a/an", "any", "first", etc. may be used interchangeably. "Certain A", "preset A", "predetermined A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

In some embodiments, determination or judgment may be performed using a value represented by 1 bit (0 or 1), or using boolean values represented by true or false, or by numerical comparison (e.g., comparison with a predetermined value), which is not limited herein.

FIG. 3A is a flowchart of a method for processing information according to an embodiment of the present disclosure. As shown in FIG. 3A, embodiments of the present disclosure relate to a method for processing information, performed by an AF network element, including the following step at S3101.

At S3101, first information is sent to an NEF network element.

For optional implementations of S3101, reference may be made to S2101 in FIG. 2A and other related parts in the embodiments in FIG. 2A, which is not repeated here.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

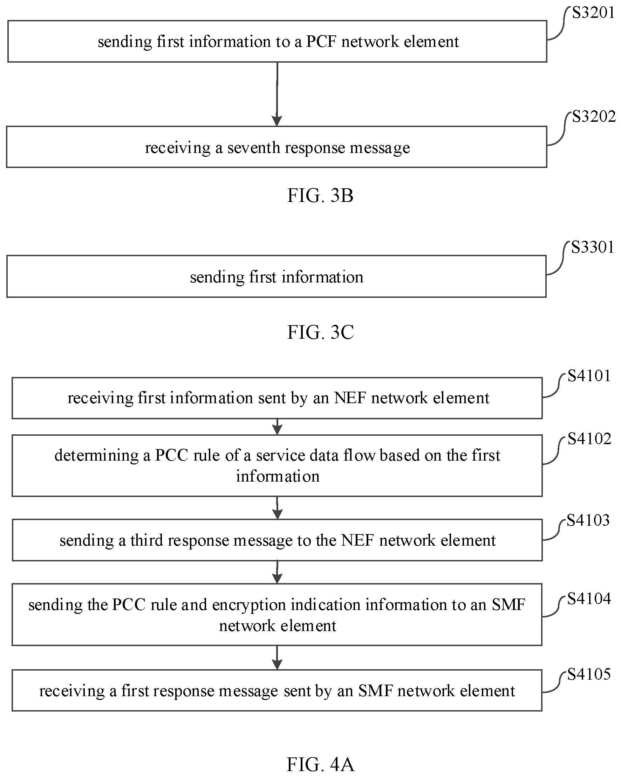

FIG. 3B is a flowchart of a method for processing information according to an embodiment of the present disclosure. As shown in FIG. 3B, embodiments of the present disclosure relate to a method for processing information, performed by an AF network element, including the following steps at S3201 to S3202.

At S3201, first information is sent to a PCF network element.

At S3202, a seventh response message is received.

For optional implementations of S3201 to S3202, reference may be made to S2201 and S2203 in FIG. 2B and other related parts in the embodiments in FIG. 2B, which is not repeated here.

The method for processing information in the embodiments of the present disclosure may include at least one of S3201 to S3202. For example, S3201 may be implemented as an independent embodiment, and S3202 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 3C is a flowchart of a method for processing information according to an embodiment of the present disclosure. As shown in FIG. 3C, embodiments of the present disclosure relate to a method for processing information, performed by an AF network element, including the following step at S3301.

At S3301, first information is sent.

In some embodiments, in some embodiments, in a case that the AF network element is a trusted AF network element, the AF network element may directly send the first information to the PCF network element.

In some embodiments, the AF network element may send the first information to the PCF network element via a new message.

In some embodiments, the AF network element may send the first information to the PCF network element via an existing message.

In some embodiments, the AF network element may send the first information to the NEF network element via an AF QoS request. That is, the first information is carried in the AF QoS request, and the AF network element sends the AF QoS request to the NEF network element, realizing sending the first information to the NEF network element.

In some embodiments, the AF network element sends the first information to the NEF network element via an AF QoS update message. That is, the AF QoS update message may carry the first information, and the AF network element sends the AF QoS request or the AF QoS update message to the NEF network element, realizing sending the first information to the NEF network element.

In some embodiments, the AF network element may send the first information to the NEF network element during an AF session creation process. Optionally, the AF network element may send the first information to the NEF network element via an AF session create request (Nnef_AFsessionWithQoS_Create request). That is, the Nnef_AFsessionWithQoS_Create request may carry the first information, and the AF network element sends the Nnef_AFsessionWithQoS_Create request to the NEF network element, realizing sending the first information to the NEF network element.

In some embodiments, in a case that the AF network element is a non-trusted AF network element, the AF network element may send the first information to a PCF network element via the NEF network element.

In some embodiments, the AF network element may send the first information to the NEF network element via a new message.

In some embodiments, the AF network element may send the first information to the NEF network element via an existing message.

In some embodiments, the AF network element may send the first information to the NEF network element via an AF QoS request. That is, the first information is carried in the AF QoS request, and the AF network element sends the AF QoS request to the NEF network element, realizing sending the first information to the NEF network element.

In some embodiments, the AF network element sends the first information to the NEF network element via an AF QoS update message. That is, the AF QoS update message may carry the first information, and the AF network element sends the AF QoS request or the AF QoS update message to the NEF network element, realizing sending the first information to the NEF network element.

In some embodiments, the AF network element may send the first information to the NEF network element during an AF session creation process. Optionally, the AF network element may send the first information to the NEF network element via an AF session create request with QoS (Nnef_AFsessionWithQoS_Create request). That is, the Nnef_AFsessionWithQoS_Create request may carry the first information, and the AF network element sends the Nnef_AFsessionWithQoS_Create request to the NEF network element, realizing sending the first information to the NEF network element.

In some embodiments, terms such as "AF QoS", "application function quality of service", and "application function QoS" may be used interchangeablely.

For optional implementations of S3301, reference may be made to S2101 in FIG. 2A, S2201 in FIG. 2B, and other related parts in the embodiments in FIG. 2A and FIG. 2B, which is not repeated here.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 4A is a flowchart of a method for processing information according to an embodiment of the present disclosure. As shown in FIG. 4A, embodiments of the present disclosure relate to a method for processing information, performed by a PCF network element, including the following steps at S4101 to S4105.

At S4101, first information sent by an NEF network element is received.

At S4102, a PCC rule of a service data flow is determined based on the first information.

At S4103, a third response message is sent to the NEF network element.

At S4104, the PCC rule and encryption indication information are sent to an SMF network element.

At S4105, a first response message sent by an SMF network element is received.

For optional implementations of S4101 to S4105, reference may be made to S2101, S2104, S2105, S2107, S2108 in FIG. 2A and other related parts in the embodiments in FIG. 2A, which is not repeated here.

The method for processing information in the embodiments of the present disclosure may include at least one of S4101 to S4105. For example, S4101 may be implemented as an independent embodiment, S4102 may be implemented as an independent embodiment, and the combination of S4101 and S4102 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

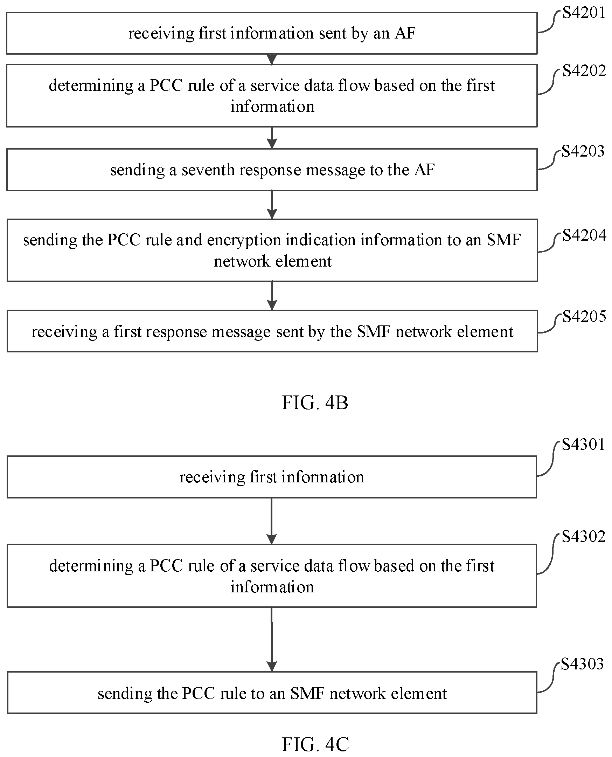

FIG. 4B is a flowchart of a method for processing information according to an embodiment of the present disclosure. As shown in FIG. 4B, embodiments of the present disclosure relate to a method for processing information, performed by a PCF network element, including the following steps at S4201 to S4205.

At S4201, first information sent by an AF is received.

At S4202, a PCC rule of a service data flow is determined based on the first information.

At S4203, a seventh response message is sent to the AF.

At S4204, the PCC rule and encryption indication information are sent to an SMF network element.

At S4205, a first response message sent by the SMF network element is received.

For optional implementations of S4201 to S4205, reference may be made to S2201 to S2205 in FIG. 2B and other related parts in the embodiments in FIG. 2B, which is not repeated here.

The method for processing information in the embodiments of the present disclosure may include at least one of S4201 to S4205. For example, S4201 may be implemented as an independent embodiment, S4202 may be implemented as an independent embodiment, and the combination of S4201 and S4202 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 4C is a flowchart of a method for processing information according to an embodiment of the present disclosure. As shown in FIG. 4C, embodiments of the present disclosure relate to a method for processing information, performed by a PCF network element, including the following steps at S4301 to S4303.

At S4301, first information is received.

At S4302, a PCC rule of a service data flow is determined based on the first information.

At S4303, the PCC rule is sent to an SMF network element.

For optional implementations of S4301 to S4303, reference may be made to S2301 to S2303 in FIG. 2C and other related parts in the embodiments in FIG. 2C, which is not repeated here.

The method for processing information in the embodiments of the present disclosure may include at least one of S4301 to S4303. For example, S4301 may be implemented as an independent embodiment, S4302 may be implemented as an independent embodiment, and the combination of S4301 and S4302 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

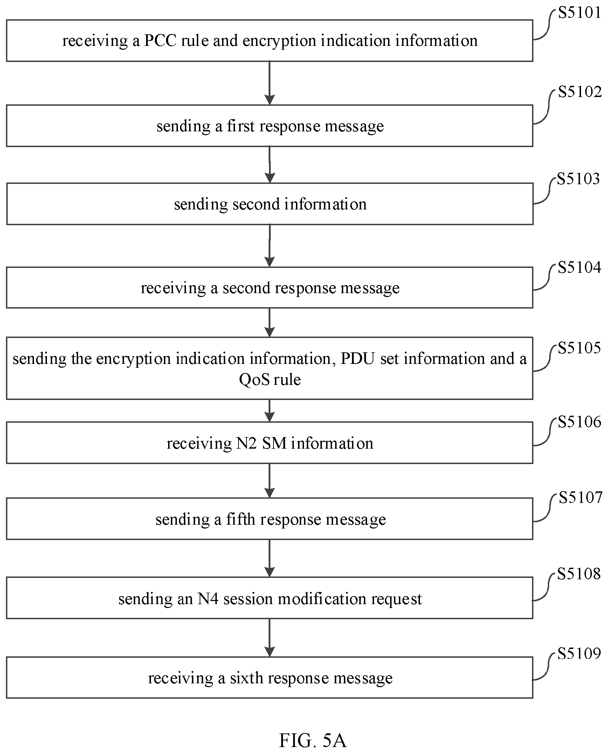

FIG. 5A is a flowchart of a method for processing information according to an embodiment of the present disclosure. As shown in FIG. 5A, embodiments of the present disclosure relate to a method for processing information, performed by an SMF network element, including the following steps at S5101 to S5109.

At S5101, a PCC rule and encryption indication information are received.

At S5102, a first response message is sent.

At S5103, second information is sent.

At S5104, a second response message is received.

At S5105, the encryption indication information, PDU set information and a QoS rule are sent.

At S5106, N2 SM information is received.

At S5107, a fifth response message is sent.

At S5108, an N4 session modification request is sent.

At S5109, a sixth response message is received.

For optional implementations of S5101 to S5109, reference may be made to S2107 to S2111, S2115 to S2118 in FIG. 2A and other related parts in the embodiments in FIG. 2A, which is not repeated here.

The method for processing information in the embodiments of the present disclosure may include at least one of S5101 to S5109. For example, S5101 may be implemented as an independent embodiment, S5102 may be implemented as an independent embodiment, the combination of S5101 and S5102 may be implemented as an independent embodiment, and the combination of S5101, S5102, and S5103 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

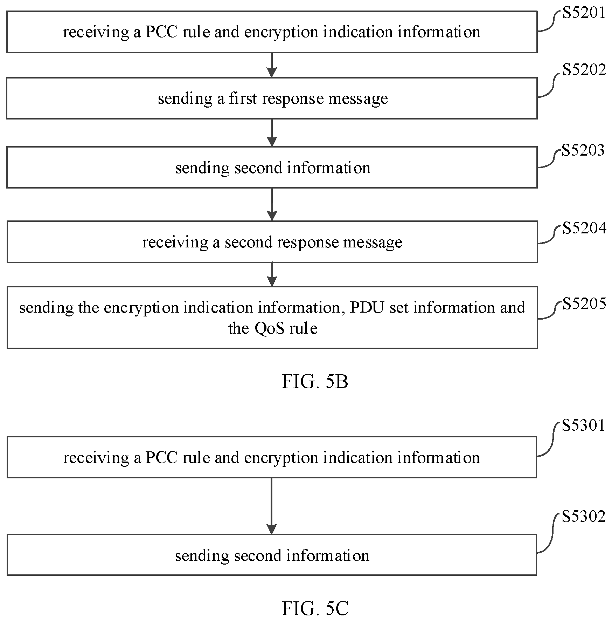

FIG. 5B is a flowchart of a method for processing information according to an embodiment of the present disclosure. As shown in FIG. 5B, embodiments of the present disclosure relate to a method for processing information, performed by an SMF network element, including the following steps at 5201 to S5205.

At S5201, a PCC rule and encryption indication information are received.

At S5202, a first response message is sent.

At S5203, second information is sent.

At S5204, a second response message is received.

At S5205, the encryption indication information, PDU set information and the QoS rule are sent.

For optional implementations of S5201 to S5205, reference may be made to S2107 to S2111 in FIG. 2A and other related parts in the embodiments in FIG. 2A, which is not repeated here.

The method for processing information in the embodiments of the present disclosure may include at least one of S5201 to S5205. For example, S5201 may be implemented as an independent embodiment, S5203 may be implemented as an independent embodiment, and the combination of S5201 and S5203 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 5C is a flowchart of a method for processing information according to an embodiment of the present disclosure. As shown in FIG. 5C, embodiments of the present disclosure relate to a method for processing information, performed by an SMF network element, including the following steps at S5301 to S5302.

At S5301, a PCC rule and encryption indication information are received.

At S5302, second information is sent.

For optional implementations of S5301 to S5302, reference may be made to S2107 and S2109 in FIG. 2A and other related parts in the embodiments in FIG. 2A, which is not repeated here.

The method for processing information in the embodiments of the present disclosure may include at least one of S5301 to S5302. For example, S5301 may be implemented as an independent embodiment, and S5302 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

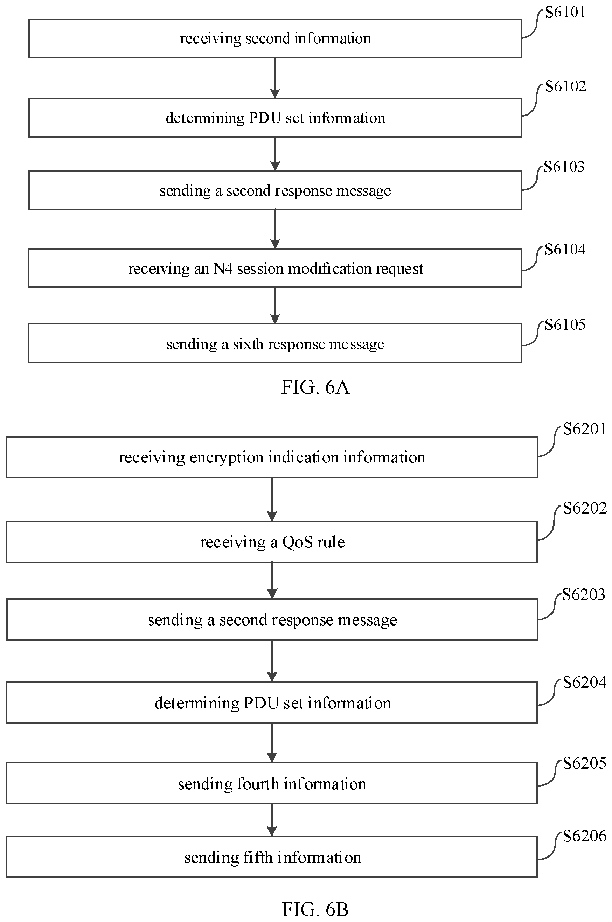

FIG. 6A is a flowchart of a method for processing information according to an embodiment of the present disclosure. As shown in FIG. 6A, embodiments of the present disclosure relate to a method for processing information, performed by a UPF network element, including the following steps at S6101 to S6105.

At S6101, second information is received.

At S6102, PDU set information is determined.

At S6103, a second response message is sent.

At S6104, an N4 session modification request is received.

At S6105, a sixth response message is sent.

For optional implementations of S6101 to S6105, reference may be made to S2109 to S2110, S2117 to S2118 in FIG. 2A and other related parts in the embodiments in FIG. 2A, which is not limited herein.

The method for processing information in the embodiments of the present disclosure may include at least one of S6101 to S6105. For example, S6101 may be implemented as an independent embodiment, S6102 may be implemented as an independent embodiment, and the combination of S6101 and S6102 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 6B is a flowchart of a method for processing information according to an embodiment of the present disclosure. As shown in FIG. 6B, embodiments of the present disclosure relate to a method for processing information, performed by a UPF network element, including the following steps at S6201 to S6206.

At S6201, encryption indication information is received.

At S6202, a QoS rule is received.

At S6203, a second response message is sent.

At S6204, PDU set information is determined.

At S6205, fourth information is sent.

At S6206, fifth information is sent.

For optional implementations of S6201 to S6206, reference may be made to S2206 to S2211 in FIG. 2B and other related parts in the embodiments in FIG. 2B, which is not repeated here.

The method for processing information in the embodiments of the present disclosure may include at least one of S6201 to S6206. For example, S6201 may be implemented as an independent embodiment, S6202 may be implemented as an independent embodiment, and the combination of S6201 and S6202 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

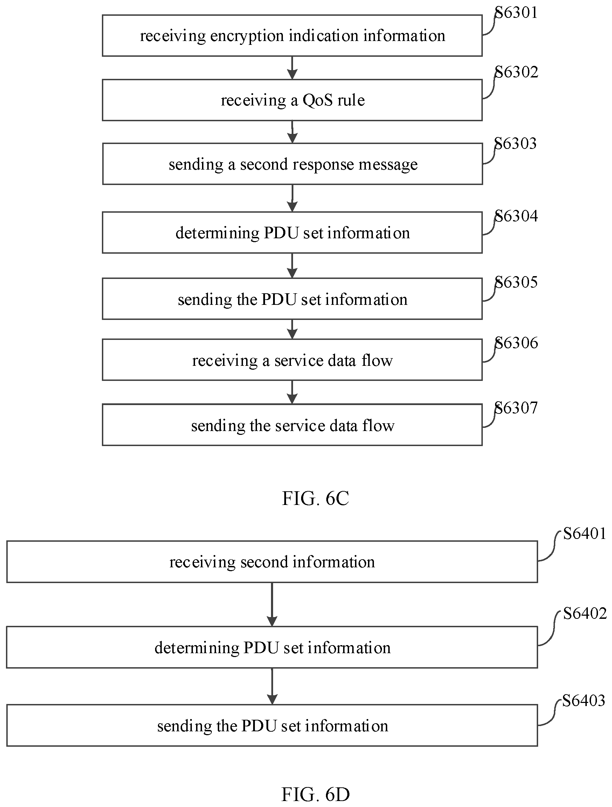

FIG. 6C is a flowchart of a method for processing information according to an embodiment of the present disclosure. As shown in FIG. 6D, embodiments of the present disclosure relate to a method for processing information, performed by a UPF network element, including the following steps at S6301 to S6307.

At S6301, encryption indication information is received.

At S6302, a QoS rule is received.

At S6303, a second response message is sent.

At S6304, PDU set information is determined.

At S6305, the PDU set information is sent.

At S6306, a service data flow is received.

At S6307, the service data flow is sent.

For optional implementations of S6301 to S6307, reference may be made to S2404 to S2409 in FIG. 2D and other related parts in the embodiments in FIG. 2D, which is not repeated here.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 6D is a flowchart of a method for processing information according to an embodiment of the present disclosure. As shown in FIG. 6D, embodiments of the present disclosure relate to a method for processing information, performed by a UPF network element, including the following steps at S6401 to S6403.

At S6401, second information is received.

At S6402, PDU set information is determined.

At S6403, the PDU set information is sent.

For optional implementations of S6401 to S6403, reference may be made to S2404 to S2407 in FIG. 2D and other related parts in the embodiments in FIG. 2D, which is not repeated here.

The method for processing information in the embodiments of the present disclosure may include at least one of S6401 to S6403. For example, S6401 may be implemented as an independent embodiment, S6402 may be implemented as an independent embodiment, and the combination of S6401 and S6402 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

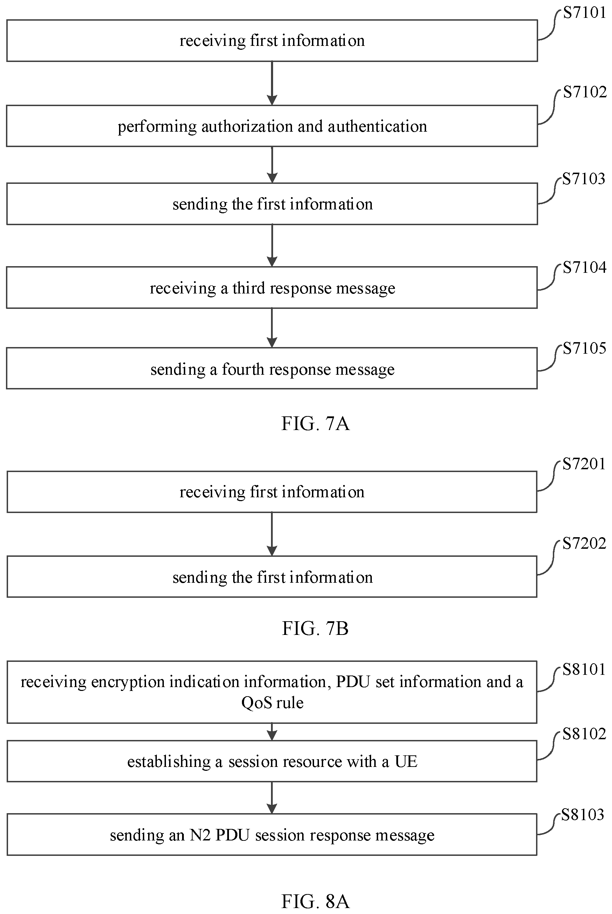

FIG. 7A is a flowchart of a method for processing information according to an embodiment of the present disclosure. As shown in FIG. 7A, embodiments of the present disclosure relate to a method for processing information, performed by an NEF network element, including the following steps at S7101 to S7105.

At S7101, first information is received.

At S7102, authorization and authentication are performed.

At S7103, the first information is sent.

At S7104, a third response message is received.

At S7105, a fourth response message is sent.

For optional implementations of S7101 to S7105, reference may be made to S2101 to S2103, S2105 to S2106 in FIG. 2A and other related parts in the embodiments in FIG. 2A, which is not repeated here.

The method for processing information in the embodiments of the present disclosure may include at least one of S7101 to S7105. For example, S7101 may be implemented as an independent embodiment, S7103 may be implemented as an independent embodiment, and the combination of S7101 and S7103 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 7B is a flowchart of a method for processing information according to an embodiment of the present disclosure. As shown in FIG. 7B, embodiments of the present disclosure relate to a method for processing information, performed by an NEF network element, including the following steps at S7201 to S7202.

At S7201, first information is received.

At S7202, the first information is sent.

For optional implementations of S7201 to S7202, reference may be made to S2101 and S2102 in FIG. 2A and other related parts in the embodiments in FIG. 2A, which is not repeated here.

The method for processing information in the embodiments of the present disclosure may include at least one of S7201 to S7202. For example, S7201 may be implemented as an independent embodiment, S7202 may be implemented as an independent embodiment, and the combination of S7201 and S7202 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 8A is a flowchart of a method for processing information according to an embodiment of the present disclosure. As shown in FIG. 8A, embodiments of the present disclosure relate to a method for processing information, performed by an RAN network element, including the following steps at S8101 to S8103.

At S8101, encryption indication information, PDU set information and a QoS rule are received.

At S8102, a session resource is established with a UE.

At S8103, an N2 PDU session response message is sent.

For optional implementations of S8101 to S8103, reference may be made to S2112 to S2114 in FIG. 2A and other related parts in the embodiments in FIG. 2A, which is not repeated here.

The method for processing information in the embodiments of the present disclosure may include at least one of S8101 to S8103. For example, S8101 may be implemented as an independent embodiment, and S8102 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

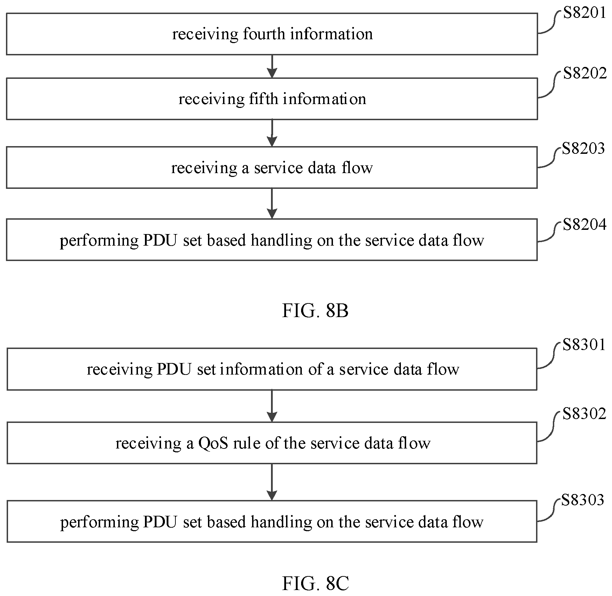

FIG. 8B is a flowchart of a method for processing information according to an embodiment of the present disclosure. As shown in FIG. 8B, embodiments of the present disclosure relate to a method for processing information, performed by an RAN network element, including the following steps at S8201 to S8204.

At S8201, fourth information is received.

At S8202, fifth information is received.

At S8203, a service data flow is received.

At S8204, PDU set based handling is performed on the service data flow.

For optional implementations of S8201 to S8204, reference may be made to S2406 to S2407, S2409 to S2410 in FIG. 2D and other related parts in the embodiments in FIG. 2D, which is not repeated here.

The method for processing information in the embodiments of the present disclosure may include at least one of S8201 to S8204. For example, S8201 may be implemented as an independent embodiment, S8202 may be implemented as an independent embodiment, and the combination of S8201 and S8202 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 8C is a flowchart of a method for processing information according to an embodiment of the present disclosure. As shown in FIG. 8C, embodiments of the present disclosure relate to a method for processing information, performed by an RAN network element, including the following steps at S8301 to S8303.

At S8301, PDU set information of a service data flow is received.

At S8302, a QoS rule of the service data flow is received.

At S8303, PDU set based handling is performed on the service data flow.

For optional implementations of S8301 to S8303, reference may be made to S2406 to S2407 and S2410 in FIG. 2D and other related parts in the embodiments in FIG. 2D, which is not repeated here.

The method for processing information in the embodiments of the present disclosure may include at least one of S8301 to S8303. For example, S8301 may be implemented as an independent embodiment, and S8302 may be implemented as an independent embodiment, which is not limited herein.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

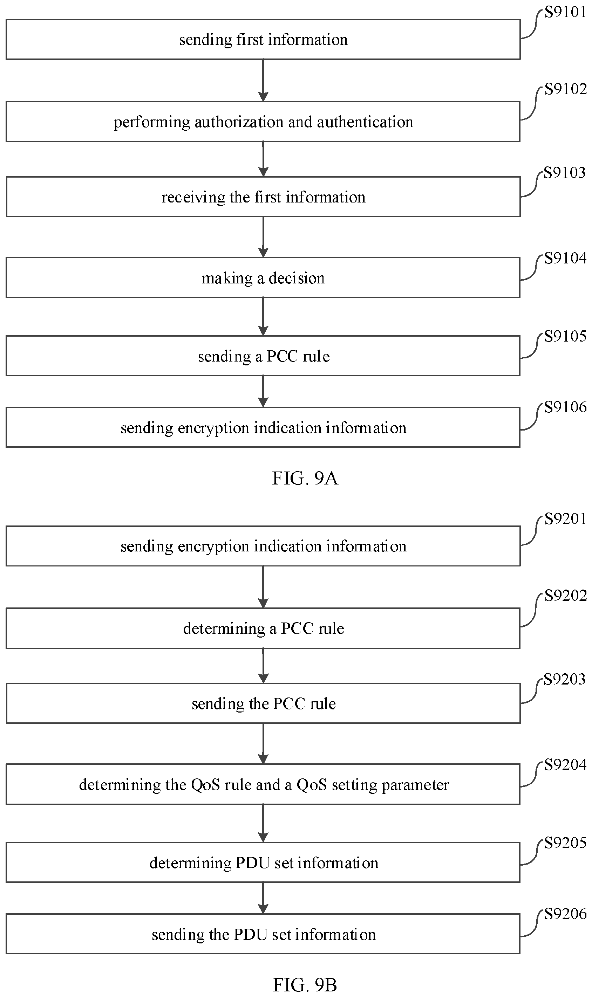

FIG. 9A is a flowchart of a method for processing information according to an embodiment of the present disclosure. As shown in FIG. 9A, embodiments of the present disclosure relate to a method for processing information, including the following steps at S9101 to S9106.

At S9101, first information is sent.

An AF sends an AF session resource request, i.e., the AF sends the first information, for example, creating an AF request via an Nnef_AFsessionWithQoS_Create request. The AF carries a QoS requirement of an XRM service and an interactive media service data flow in a request message. The AF sends encryption indication information (the encryption indication information includes at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description) to a 5GC (NEF/PCF). The AF may provide the encryption indication information to the NEF/PCF during an AF QoS request/update procedure.

Optionally, it carries XRM service information, identification of an XRM service data flow or a data flow group (e.g., multimodal transport ID), a UE address/UE identifier, an AF identifier application ID, a flow description, a DNN, S-NSSAI, a QoS parameter, and other corresponding information. The multimodal transport ID may be used to identify all procedures in an XRM service group.

At S9102, authorization and authentication are performed.

The NEF authorizes the AF request. If it is a non-trusted AF, the AF request is sent to the PCF via the NEF. (Optionally, the NEF performs related mapping, including mapping of an identifier of the XRM service (AF service identifier) to the DNN and the S-NSSAI; mapping of an external application to a CN application identifier; mapping of an external UE identifier to a UE identifier within the CN (e.g., SUPI) based on UDM subscription information; or mapping of XRM service group identifiers from external to internal based on UDM subscription information).

The NEF authorizes the AF request, and determines whether to invoke a TSCTSF or directly contact the PCF based on a parameter provided by the AF (these signaling steps are the same as that of setting up an AF session with a required QoS procedure in TS 23.502, 15.6.6). The PCF receives AF provided attributes from the NEF or the TSCTSF.

At S9103, the first information is received.

The NEF triggers an Npcf_PolicyAuthorization_Create request, sends the AF request to the PCF, which carries QoS requirement information for the PCF to make a policy decision. The message carries encryption indication information of a corresponding SDF (including at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description).

At S9104, a decision is made.

The PCF makes a policy decision. The PCF may determine that updated or new policy information needs to be sent to the SMF. The PCF determines a PCC rule based on the encryption indication information (including at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description) which is provided by the AF.

The PCF sends the encryption indication information received from the AF/NEF to the SMF via the PCC rule, i.e., the encryption indication information is delivered to the SMF in the PCC rule.

The PCF responds to the NEF an Npcf_Policy Authorization_Create response.

The NEF sends an Nnef_AFsessionWithQoS_Create response message to the AF, which carries a result that informs whether the request is authorized.

At S9105, the PCC rule is sent.

The PCF initiates an SM policy association modification request to send the PCC rule to the SMF.

Upon reception of the PCC rule, the SMF determines a QoS rule and a QoS setting parameter, and configure/activate the rule to the UPF (e.g. via the N4 session), based on the encryption indication information (including at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description).

The SMF replies an SM policy association modification response to the PCF.

The SMF initiates an N4 session modification request (the encryption indication information) to the UPF.

At S9106, encryption indication information is sent.

The UPF(s) respond to the SMF.

Based on the encryption indication information, the UPF identifies and determines PDU set information which it sends to the NG-RAN (e.g. in an extension header or a GTP-U header), based on the encryption indication information (including at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description).

In addition, the UPF sends the encryption indication information to the NG-RAN (e.g., in the extension header or the GTP-U header).

For SMF requested modification, the SMF invokes Namf_Communication_N1N2MessageTransfer ([N2 SM information] (PDU session ID, QFI(s), QoS profile(s)), N1 SM container)).

The AMF may send an N2 ([N2 SM information received from the SMF], NAS message (PDU session ID, N1 SM container (PDU session modification command))) message to the (R)AN.

The (R)AN may acknowledge an N2 PDU session request by sending an N2 PDU session ack message to the AMF.

The AMF forwards the N2 SM information received from the AN to the SMF via an Nsmf_PDUSession_UpdateSMContext service operation.

The SMF replies with a Nsmf_PDUSession_UpdateSMContext response.

The SMF may update an N4 session of the UPF(s) involved in PDU session modification by sending an N4 session modification request message to the UPF.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

FIG. 9B is a flowchart of a method for processing information according to an embodiment of the present disclosure. As shown in FIG. 9B, embodiments of the present disclosure relate to a method for processing information, including the following steps at S9201 to S9206.

At 1a, steps in FIG. 9A are performed.

At 1b, an AF may send information (a QoS parameter for each PDU set within a QoS flow, and a parameter on a frame identification) to a PCF via Nnef_AFsessionWithQoS_Create request. The AF may also provide the information to a 5GS prior to PDU session establishment.

At S9201, encryption indication information is sent.

The AF sends the encryption indication information (including at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description) to a 5GC (NEF/PCF).

The AF may provide the encryption indication information to the NEF/PCF during an AF QoS request/update procedure.

This includes a protocol description and PDU set related assistance information. The PDU set related assistance information may include a QoS parameter for each PDU set in the QoS flow, such as: PDU set handling indication (indicating if PDU set based handling should be activated to the flow), which may be implicitly indicated via other PDU set related information provided by the AF; whether all PDUs are needed for the usage of a PDU set by an application layer; a PDU delay budget; or a PDU set (configuration) error rate.

At S9202, a PCC rule is determined.

The PCF generates an appropriate PCC rule, which may include a PDU set related QoS parameter (as follows). The PCF sends the PCC rule to the SMF.

The PCF determines the PCC rule based on the encryption indication information (the encryption indication information includes at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description).

At S9203, the PCC rule is sent.

The PCF sends the encryption indication information received from the AF/NEF to the SMF via the PCC rule.

The PDU set related QoS parameter is a new QoS parameter for PDU set based QoS handling in the 5GS, and may include: a PSDB; a PSER; whether all PDUs are needed for the usage of a PDU set by an application layer; whether to drop the PDU set in case the PSDB is exceeded; if this step is triggered by step 1b, the PCF may generate the PCC rule based on the information provided by the AF.

At S9204, the QoS rule and a QoS setting parameter are determined.

The SMF generates a QoS profile and an N4 rule based on the PCC rule provided by the PCF. The SMF sends the N4 rule to the UPF and sends the QoS profile to an RAN node via the AMF. Upon reception of the PCC rule, the SMF determines the QoS rule and the QoS setting parameter, to configure/activate the rule to the UPF (e.g. via the N4 session), based on the encryption indication information. Upon reception of the PCC rule, the SMF forwards an indication of PSI to the UPF (e.g. via the N4 session). The protocol description and the PDU set related assistance information are sent to the SMF as part of the PCC rule. The SMF sends them to the NG-RAN via the AMF as part of the QoS profile.

At S9205, PDU set information is determined.

Based on a received N4 rule or a locally configuration on the UPF, the UPF identifies related information (as follows), and performs PDU set based QoS handling based on an N4 rule instruction. The UPF identifies PDUs belonging to a PDU set, and information of each PDU set are described below.

Upon reception of the PCC rule, the SMF determines the QoS rule and the QoS Set parameter, and configure/activate the rule to the UPF (e.g. via the N4 session), based on the encryption indication information (the encryption indication information includes at least one of: whether a PDU/SDF is encrypted, whether PDU set handling of an encrypted PDU/SDF is supported, whether a header is fully encrypted, whether a header is partially encrypted, whether an encrypted proxy is supported, whether it is E2E encryption, whether to prioritize execution of PDU set handling of an encrypted PDU, or encryption protocol description).

Additionally, the UPF send the encryption indication information to the NG-RAN (e.g. in the extension header or the GTP-U header). Or, (UP) encryption indication information is provided to the UPF from an AS (directly or via the NEF). The UPF identifies and determines the PDU set information which it sends to the NG-RAN in the extension header (e.g. the GTP-U header), based on the encryption indication information. The UPF sends the encryption indication information to the NG-RAN in the extension header (e.g. the GTP-U header). Or, (a UPF configuration), based on an operation administration and maintenance (OAM) configuration, or an operator policy, the UPF identifies and determines the PDU set information which it sends to the NG-RAN in the extension header (e.g. the GTP-U header), based on the encryption indication information. The UPF sends the encryption indication information to the NG-RAN in the extension header (e.g. the GTP-U header).

The PDU set information including at least one of the following parameters: a PDU set sequence number (SN) (the QoS flow is identified using a QoS flow ID and each PDU set within the QoS flow is identified using the PDU set SN.), in which each QoS flow may be used to deliver one or more PDU sets; a start/end PDU of the PDU set; a sequence number of a PDU within the PDU set; a PDU set size; importance of a PDU set; a PDU set size; or an end of data burst.

The UPF identifies the related information via methods/mechanisms described, as follows: Option 1: matching a real-time transport protocol (RTP)/secure real-time transport protocol (SRTP) header and valid payload; Option 2: a new RTP extension header; Option 3: information provided by the AS in an N6 encapsulation header, e.g., GTP-U; Option 4: detection based on a traffic characteristic; and Option 5: a non-standardized mechanism UPF implementation.

At S9206, the PDU set information is sent.

The UPF sends the PDU set information to the RAN. The UPF sends the PDU set related information above.

The RAN performs PDU set based QoS handling based on the PDU set related information received in step 6.

In the implementations or embodiments, in the absence of contradiction, each step may be independent, arbitrarily combined or exchanged in order. Optional methods or examples may be arbitrarily combined, and may be arbitrarily combined with any steps of other implementations or embodiments.

The embodiments of the present disclosure further provide an apparatus for implementing any one of the above methods. For example, an apparatus is provided, including units or modules for implementing each step executed by the terminal in any one of the above methods. For another example, another apparatus is provided, including units or modules for implementing each step executed by the network device (e.g., an access network device, a core network function node, a core network device, etc.) in any one of the above methods.

It should be understood that the division of units or modules in the above apparatuses is merely a division of logical functions. In actual implementations, the units or modules may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

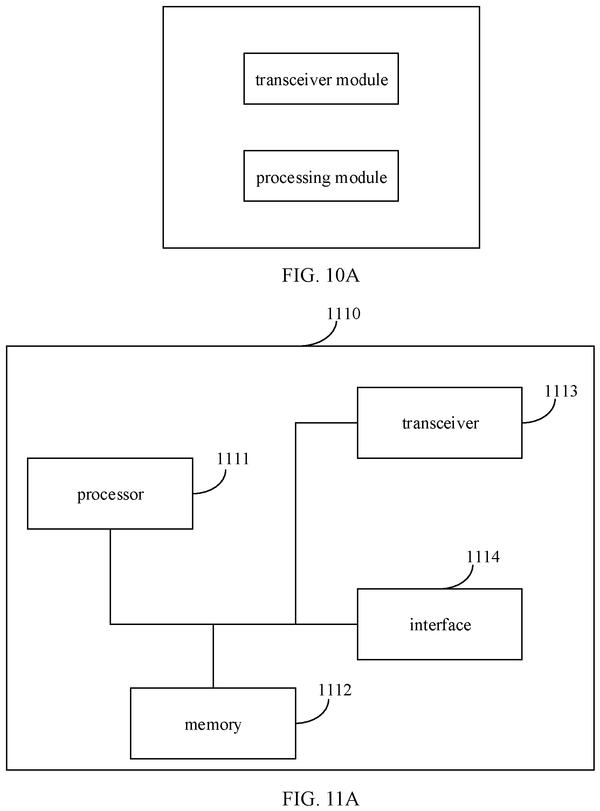

FIG. 10A is a block diagram of a network element according to an embodiment of the present disclosure. As shown in FIG. 10A, an AF network element 1010 may include: a transceiver module 1011. In some embodiments, the transceiver module 1011 receives a PCC rule and encryption indication information of a service data flow, and determines a QoS rule of the service data flow based on the PCC rule and the encryption indication information, in which the QoS rule includes a PDU set QoS parameter of the service data flow; and sends second information to a UPF network element, in which the second information includes the QoS rule or the encryption indication information.

FIG. 10A is a block diagram of a network element according to an embodiment of the present disclosure. As shown in FIG. 10A, a PCF network element 1020 may include: a transceiver module 1021 and a processing module 1022. In some embodiments, the transceiver module 1021 is configured to receive first information, in which the first information includes QoS requirement information and encryption indication information of a service data flow, configured for an RAN element to perform PDU set based handling; and send a PCC rule to an SMF network element; and the processing module 1022 is configured to determine the PCC rule of the service data flow based on the QoS requirement information and the encryption indication information.

FIG. 10A is a block diagram of a network element according to an embodiment of the present disclosure. As shown in FIG. 10A, an SMF network element 1030 may include: a transceiver module 1031. In some embodiments, the transceiver module 1031 is configured to receive a PCC rule and encryption indication information of a service data flow, and determine a QoS rule of the service data flow based on the PCC rule and the encryption indication information, in which the QoS rule includes a PDU set QoS parameter of the service data flow; and send second information to a UPF network element, in which the second information includes at least one of the QoS rule or the encryption indication information.

FIG. 10A is a block diagram of a network element according to an embodiment of the present disclosure. As shown in FIG. 10A, a UPF network element 1040 may include: a transceiver module 1041 and a processing module 1042. In some embodiments, the transceiver module 1041 is configured to receive encryption indication information of a service data flow, and send PDU set information of the service data flow to an RAN network element; and the processing module 1042 is configured to identify and determine the PDU set information from an extension header of the service data flow based on the encryption indication information.

FIG. 10A is a block diagram of a network element according to an embodiment of the present disclosure. As shown in FIG. 10A, an NEF network element 1050 may include: a transceiver module 1051. In some embodiments, the transceiver module 1051 is configured to receive first information sent by an AF network element, in which the first information includes QoS requirement information and encryption indication information of a service data flow, configured for an RAN element to perform encrypted PDU set based handling; and send the first information to a PCF network element.

FIG. 10A is a block diagram of a network element according to an embodiment of the present disclosure. As shown in FIG. 10A, an RAN network element 1060 may include: a transceiver module 1061 and a processing module 1062. In some embodiments, the transceiver module 1061 is configured to receive PDU set information of a service data flow sent by a UPF network element, and receive a QoS rule of the service data flow, in which the QoS rule includes a PDU set QoS parameter of the service data flow; and the processing module 1062 is configured to perform PDU set based handling on a received service data flow based on the PDU set information and the QoS rule.

FIG. 11A is a block diagram of a communication device 1100 according to an embodiment of the present disclosure. The communication device 1100 may be a network device (e.g., an access network device, a core network device, etc.), or may be a terminal (e.g., a user equipment, etc.), or may be a chip, a chip system, or a processor that supports the network device in implementing any one of the above methods, or may be a chip, a chip system, or a processor that supports the terminal in implementing any one of the above methods. The communication device 1100 may be used to implement the methods described in the above method embodiments. For details, reference may be made to the descriptions in the above method embodiments.

As shown in FIG. 11A, the communication device 1100 includes one or more processors 1101. The processor 1101 may be a general-purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a DU, or a CU), executing programs, and processing data of the programs. The processor 1101 is configured to invoke instructions to cause the communication device 1100 to implement any one of the above methods.

In some embodiments, the communication device 1100 further includes one or more memories 1102 for storing instructions. Optionally, all or some of the memories 1102 may also be located outside the communication device 1100.

In some embodiments, the communication device 1100 further includes one or more transceivers 1103. When the communication device 1100 includes one or more transceivers 1103, communication steps such as sending and receiving in the above methods are implemented by the transceiver 1103, and other steps are implemented by the processor 1101.

In some embodiments, the transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

Optionally, the communication device 1100 further includes one or more interface circuits 1104. The interface circuit 1104 is connected to the memory 1102 and may be used to receive signals from the memory 1102 or other devices, and send the signals to the memory 1102 or other devices. For example, the interface circuit 1104 may read instructions stored in the memory 1102 and send the instructions to the processor 1101.

The communication device 1100 in the description of the above embodiments may be a network device or a terminal, but the scope of the communication device 1100 described in the disclosure is not limited herein, and the structure of the communication device 1100 may not be limited by FIG. 11A. The communication device may be a stand-alone device or may be part of a larger device. For example, the communication device may be: (1) a stand-alone IC, a chip, a chip system or a subsystem; (2) a collection of ICs including one or more ICs, in some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

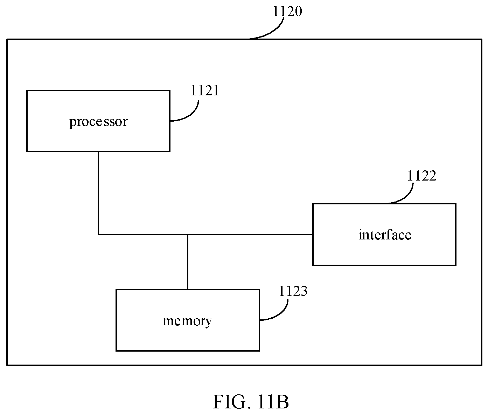

FIG. 11B is a block diagram of a chip 1200 according to an embodiment of the present disclosure. For a case where the communication device 1100 may be a chip or a chip system, reference may be made to the block diagram of the chip 1200 shown in FIG. 11B, which is not limited herein.

The chip 1200 includes one or more processors 1201, and the chip 1200 is used to perform any one of the above methods.

In some embodiments, the chip 1200 further includes one or more interface circuits 1202. Optionally, the interface circuit 1202 is connected to a memory 1203, and the interface circuit 1202 may be used to receive signals from the memory 1203 or other devices, and the interface circuit 1202 may be used to send the signals to the memory 1203 or other devices. For example, the interface circuit 1202 may read instructions stored in the memory 1203 and send the instructions to the processor 1201.

In some embodiments, the interface circuit 1202 performs at least one of communication steps such as sending and/or receiving in the above method, and the processor 1201 performs at least one of other steps.

In some embodiments, terms such as interface circuit, interface, transceiver pin, transceiver may be used interchangeably.

In some embodiments, the chip 1200 further includes one or more memories 1203 for storing instructions. Optionally, all or part of the memories 1203 may be located outside the chip 1200.

The present disclosure further provides a storage medium for storing instructions. When the instructions are running on the communication device 1100, the communication device 1100 is caused to perform any one of the above methods. Optionally, the storage medium is an electronic storage medium. Optionally, the storage medium is a computer-readable storage medium, but is not limited thereto, and may also be a storage medium readable by other devices. Optionally, the storage medium may be a non-transitory storage medium, but is not limited thereto, and may also be a transitory storage medium.

The present disclosure further provides a program product. When the program product is executed by the communication device 1100, the communication device 1100 is caused to perform any one of the above methods. Optionally, the program product is a computer program product.

The present disclosure further provides a computer program. When the computer program is running on a computer, the computer is caused to perform any one of the above methods.

## Claims

1. A method for processing information, performed by an application function (AF) network element, comprising:
sending, by the AF network element, first information to a policy control function (PCF) network element, wherein the first information comprises quality of service (QoS) requirement information and encryption indication information of a service data flow, configured for a radio access network (RAN) element to perform encrypted packet data unit (PDU) set based handling.

2. The method of claim 1, wherein the encryption indication information comprises at least one of:
first indication information indicating whether the service data flow is encrypted;
second indication information indicating whether the service data flow supports the encrypted PDU set based handling;
third indication information indicating an encrypted mode of a header of the service data flow, wherein the encrypted mode comprises a fully encrypted header and a partially encrypted header;
fourth indication information indicating whether the service data flow supports an encrypted proxy;
fifth indication information indicating whether the service data flow is end-to-end (E2E) encryption;
sixth indication information indicating whether the service data flow prioritizes execution of the encrypted PDU set based handling; or
description information related to an encryption protocol of the service data flow.

3. The method of claim 1, further comprising:
sending, by the AF network element, the first information to the PCF network element via an AF QoS request; or
sending, by the AF network element, the first information to the PCF network element via an AF QoS update message.

4. The method of any one of claims 1 to 3, wherein the first information further comprises at least one of:
service information of an extended reality and multimedia (XRM) service;
a terminal address or a terminal identifier;
AF application identifier information;
description information of the service data flow;
a QoS parameter of the service data flow; or
a data network name (DNN) and single-network slice selection assistance information (S-NSSAI).

5. The method of claim 1, wherein the first information carries description information of a specific protocol, and the description information of the specific protocol is configured to implicitly transmit the encryption indication information.

6. A method for processing information, performed by a policy control function (PCF) network element, comprising:
receiving, by the PCF network element, first information, wherein the first information comprises quality of service (QoS) requirement information and encryption indication information of a service data flow, configured for a radio access network (RAN) element to perform packet data unit (PDU) set based handling;
determining, by the PCF network element, a policy control and charging (PCC) rule of the service data flow based on the QoS requirement information and the encryption indication information; and
sending, by the PCF network element, the PCC rule to a session management function (SMF) network element.

7. The method of claim 6, further comprising:
sending, by the PCF network element, the encryption indication information to the SMF network element.

8. The method of claim 7, further comprising:
carrying, by the PCF network element, the encryption indication information in the PCC rule, and sending the encryption indication information to the SMF network element via the PCC rule.

9. The method of any one of claims 6 to 8, wherein the encryption indication information comprises at least one of:
first indication information indicating whether the service data flow is encrypted;
second indication information indicating whether the service data flow supports the encrypted PDU set based handling;
third indication information indicating an encrypted mode of a header of the service data flow, wherein the encrypted mode comprises a fully encrypted header and a partially encrypted header;
fourth indication information indicating whether the service data flow supports an encrypted proxy;
fifth indication information indicating whether the service data flow is end-to-end (E2E) encryption;
sixth indication information indicating whether the service data flow prioritizes execution of the encrypted PDU set based handling; or
description information related to an encryption protocol of the service data flow.

10. The method of any one of claims 6 to 9, further comprising:
receiving, by the PCF network element, the first information sent by an application function (AF) network element; or
receiving, by the PCF network element, the first information sent by a network exposure function (NEF) network element.

11. The method of claim 8, further comprising:
sending, by the PCF network element, the encryption indication information to the SMF network element via a session management (SM) association modification request.

12. The method of claim 6, wherein the first information carries description information of a specific protocol, the description information of the specific protocol is configured to implicitly transmit the encryption indication information, and the method further comprises:
determining, by the PCF network element, the encryption indication information based on the description information of the specific protocol.

13. A method for processing information, performed by a session management function (SMF) network element, comprising:
receiving, by the SMF network element, a policy control and charging (PCC) rule and encryption indication information of a service data flow, and determining a quality of service (QoS) rule of the service data flow based on the PCC rule and the encryption indication information, wherein the QoS rule comprises a packet data unit (PDU) set QoS parameter of the service data flow; and
sending, by the SMF network element, second information to a user plane function (UPF) network element, wherein the second information comprises at least one of the QoS rule or the encryption indication information.

14. The method of claim 13, further comprising:
sending, by the SMF network element, a first response message to a policy control function (PCF) network element.

15. The method of claim 13, further comprising:
initiating, by the SMF network element, an N4 session modification request to the UPF network element, and sending the second information via the N4 session modification request.

16. The method of claim 13, further comprising:
receiving, by the SMF network element, a second response message sent by the UPF network element.

17. The method of any one of claims 13 to 16, wherein the encryption indication information comprises at least one of:
first indication information indicating whether the service data flow is encrypted;
second indication information indicating whether the service data flow supports encrypted PDU set based handling;
third indication information indicating an encrypted mode of a header of the service data flow, wherein the encrypted mode comprises a fully encrypted header and a partially encrypted header;
fourth indication information indicating whether the service data flow supports an encrypted proxy;
fifth indication information indicating whether the service data flow is end-to-end (E2E) encryption;
sixth indication information indicating whether the service data flow prioritizes execution of encrypted PDU set based handling; or
description information related to an encryption protocol of the service data flow.

18. The method of claim 13, wherein the encryption indication information is carried in the PCC rule or carried in other third information.

19. The method of claim 13, further comprising:
sending, by the SMF network element, the second information to a radio access network (RAN) network element via an access and mobility management function (AMF) network element.

20. A method for processing information, performed by a user plane function (UPF) network element, comprising:
receiving, by the UPF network element, encryption indication information of a service data flow;
identifying and determining, by the UPF network element, packet data unit (PDU) set information from an extension header of the service data flow based on the encryption indication information; and
sending, by the UPF network element, the PDU set information to a radio access network (RAN) network element.

21. The method of claim 20, wherein sending the PDU set information to the RAN network element comprises:
sending, by the UPF network element, the PDU set information to the RAN network element by carrying the PDU set information in an extension header of the service data flow; or
sending, by the UPF network element, fourth information, wherein the fourth information comprises the PDU set information.

22. The method of claim 20, further comprising:
sending, by the UPF network element, the encryption indication information to the RAN network element.

23. The method of claim 22, further comprising:
sending, by the UPF network element, the encryption indication information to the RAN network element in the extension header.

24. The method of claim 22, further comprising:
receiving, by the UPF network element, a quality of service (QoS) rule of the service data flow, wherein the QoS rule comprises a PDU set QoS parameter of the service data flow; and
sending, by the UPF network element, fifth information to the RAN network element, wherein the fifth information comprises the QoS rule.

25. The method of claim 24, further comprising:
receiving, by the UPF network element, the encryption indication information sent by an application server (AS) directly or by a network exposure function (NEF) network element; and
receiving, by the UPF network element, the QoS rule sent by a session management function (SMF) network element.

26. The method of claim 24, further comprising:
receiving, by the UPF network element, second information sent by an SMF network element, wherein the second information comprises the encryption indication information and the QoS rule.

27. The method of any one of claims 20 to 26, wherein the encryption indication information comprises at least one of:
first indication information indicating whether the service data flow is encrypted;
second indication information indicating whether the service data flow supports encrypted PDU set based handling;
third indication information indicating an encrypted mode of a header of the service data flow, wherein the encrypted mode comprises a fully encrypted header and a partially encrypted header;
fourth indication information indicating whether the service data flow supports an encrypted proxy;
fifth indication information indicating whether the service data flow is end-to-end (E2E) encryption;
sixth indication information indicating whether the service data flow prioritizes execution of encrypted PDU set based handling; or
description information related to an encryption protocol of the service data flow.

28. The method of claim 20, further comprising:
receiving, by the UPF network element, the service data flow sent by an AS; and
sending, by the UPF network element, the service data flow to the RAN network element.

29. A method for processing information, performed by a network exposure function (NEF) network element, comprising:
receiving, by the NEF network element, first information sent by an application function (AF) network element, wherein the first information comprises quality of service (QoS) requirement information and encryption indication information of a service data flow, configured for a radio access network (RAN) element to perform encrypted packet data unit (PDU) set based handling; and
sending, by the NEF network element, the first information to a policy control function (PCF) network element.

30. The method of claim 29, wherein the encryption indication information comprises at least one of:
first indication information indicating whether the service data flow is encrypted;
second indication information indicating whether the service data flow supports the encrypted PDU set based handling;
third indication information indicating an encrypted mode of a header of the service data flow, wherein the encrypted mode comprises a fully encrypted header and a partially encrypted header;
fourth indication information indicating whether the service data flow supports an encrypted proxy;
fifth indication information indicating whether the service data flow is end-to-end (E2E) encryption;
sixth indication information indicating whether the service data flow prioritizes execution of the encrypted PDU set based handling; or
description information related to an encryption protocol of the service data flow.

31. The method of claim 29, further comprising:
sending, by the NEF network element, the encryption indication information to a user plane function (UPF) network element.

32. A method for processing information, performed by a radio access network (RAN) element, comprising:
receiving, by the RAN network element, packet data unit (PDU) set information of a service data flow sent by a user plane function (UPF) network element;
receiving, by the RAN network element, a quality of service (QoS) rule of the service data flow, wherein the QoS rule comprises a PDU set QoS parameter of the service data flow; and
performing, by the RAN network element, PDU set based handling on a received service data flow based on the PDU set information and the QoS rule.

33. The method of claim 32, further comprising:
receiving, by the RAN network element, the service data flow sent by the UPF network element.

34. The method of claim 32, wherein receiving the PDU set information of the service data flow comprises:
determining, by the RAN network element, the PDU set information from an extension header of the service data flow; or
receiving, by the RAN network element, fourth information sent by the UPF network element, wherein the fourth information comprises the PDU set information.

35. The method of claim 32, wherein receiving, by the RAN network element, the QoS rule of the service data flow comprises:
receiving, by the RAN network element, fifth information sent by the UPF network element, wherein the fifth information comprises the QoS rule and encryption indication information; or
receiving, by the RAN network element, the QoS rule and encryption indication information forwarded by an access and mobility management function (AMF) network element.

36. An application function (AF) network element, comprising:
a transceiver module, configured to send first information to a policy control function (PCF) network element, wherein the first information comprises quality of service (QoS) requirement information and encryption indication information of a service data flow, configured for a radio access network (RAN) element to perform encrypted packet data unit (PDU) set based handling.

37. A policy control function (PCF) network element, comprising:
a transceiver module, configured to receive first information, wherein the first information comprises quality of service (QoS) requirement information and encryption indication information of a service data flow, configured for a radio access network (RAN) element to perform packet data unit (PDU) set based handling; and send a policy control and charging (PCC) rule to a session management function (SMF) network element; and
a processing module, configured to determine the PCC rule of the service data flow based on the QoS requirement information and the encryption indication information.

38. A session management function (SMF) network element, comprising:
a transceiver module, configured to receive a policy control and charging (PCC) rule and encryption indication information of a service data flow, and determine a quality of service (QoS) rule of the service data flow based on the PCC rule and the encryption indication information, wherein the QoS rule comprises a packet data unit (PDU) set QoS parameter of the service data flow; and send second information to a user plane function (UPF) network element, wherein the second information comprises at least one of the QoS rule or the encryption indication information.

39. A user plane function (UPF) network element, comprising:
a transceiver module, configured to receive encryption indication information of a service data flow, and send packet data unit (PDU) set information of the service data flow to a radio access network (RAN) network element; and
a processing module, configured to identify and determine the PDU set information from an extension header of the service data flow based on the encryption indication information.

40. A network exposure function (NEF) network element, comprising:
a transceiver module, configured to receive first information sent by an application function (AF) network element, wherein the first information comprises quality of service (QoS) requirement information and encryption indication information of a service data flow, configured for a radio access network (RAN) element to perform encrypted packet data unit (PDU) set based handling; and send the first information to a policy control function (PCF) network element.

41. A radio access network (RAN) element, comprising:
a transceiver module, configured to receive packet data unit (PDU) set information of a service data flow sent by a user plane function (UPF) network element, and receive a quality of service (QoS) rule of the service data flow, wherein the QoS rule comprises a PDU set QoS parameter of the service data flow; and
a processing module, configured to perform PDU set based handling on a received service data flow based on the PDU set information and the QoS rule.

42. A communication system, comprising: an application function (AF) network element, a policy control function (PCF) network element, a session management function (SMF) network element, a user plane function (UPF) network element, a network exposure function (NEF) network element, and a radio access network (RAN) element, wherein the AF network element is configured to implement the method for processing information of any one of claims 1 to 5, the PCF network element is configured to implement the method for processing information of any one of claims 6 to 12, the SMF network element is configured to implement the method for processing information of any one of claims 13 to 19, the UPF network element is configured to implement the method for processing information of any one of claims 20 to 28, the NEF network element is configured to implement the method for processing information of any one of claims 29 to 31, and the RAN network element is configured to implement the method for processing information of any one of claims 32 to 35.

43. A storage medium for storing instructions that, when running on a communication device, cause the communication device to perform the method for processing information of any one of claims 1 to 5, claims 6 to 12, claims 13 to 19, claims 20 to 28, claims 29 to 31, or claims 32 to 35.
